# EUROPEAN PATENT APPLICATION

(11) **EP 4 625 912 A1**
(43) Date of publication of application: **01.10.2025**
(21) Application number: 22968821.3
(22) Date of filing: 19.12.2022
(51) Int. Cl.: H04L 27/00

(54) **COMMUNICATION METHOD AND RELATED APPARATUS**

(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); YAO, Qi, Shenzhen, Guangdong 518129 (CN); LIU, Zhe, Shenzhen, Guangdong 518129 (CN)
(74) Representative: Gill Jennings & Every LLP
(86) International application number: PCT/CN2022/140161
(87) International publication number: WO 2024/130517

(57) **Abstract**

This application provides a communication method and a related apparatus. The method includes: A terminal obtains first service information, where the first service information includes an identifier of a first service; sends a first service request to a core network element based on the first service information; and sends data of the first service based on a destination address of the first service. According to the technical solutions provided in this application, scalability and flexibility of a mobile network can be improved.

## Description

### TECHNICAL FIELD

This application relates to the field of wireless communication technologies, and in particular, to a communication method and a related apparatus.

### BACKGROUND

A mobile network may establish a transmission channel for a terminal device, so that data packets of various different services are quickly and reliably transmitted between the terminal device and a data network (data network, DN). In a development process of the mobile network, for example, in development of a future 6G network, the mobile network not only may provide a connection service but may also provide additional services such as computing, perception, and data processing. These services may be used as independent functions in a core network to provide corresponding services for users.

For example, to add the foregoing additional services to the mobile network, a computing entity may be directly added to a core network user plane. The entity may be controlled by a session management (session management function, SMF) network element. In other words, a computing resource management service may be newly integrated into the SMF network element, to manage both the computing entity on the user plane and a connected user plane (user plane function, UPF) network element. Although the SMF network element is reconfigured, and the computing resource management service is added, so that the SMF network element in the core network can flexibly schedule user plane computing power, the terminal device needs to select a specific SMF network element when using a computing power service. Therefore, integration and reconfiguration of the SMF network element greatly reduce flexibility of a control plane. In addition, for other new services such as data processing and a perception service introduced in a future network, more independent services may be deployed on the user plane. If management functions of different services are added to an SMF network element still on the control plane, it is not conducive to addition of a new service and subsequent management and maintenance, and scalability is poor. Therefore, how to improve scalability and flexibility of the mobile network is an urgent problem to be resolved.

### SUMMARY

Embodiments of this application provide a communication method and a related apparatus, to improve scalability and flexibility of a mobile network.

According to a first aspect, this application provides a communication method. The method may be applied to a terminal device, or may be applied to an apparatus (for example, a chip, a chip system, or a circuit) in the terminal device or an apparatus that can be used together with the terminal device. The following uses an example in which the method is applied to the terminal device for description. The method may include: The terminal device obtains first service information, where the first service information includes an identifier of a first service; sends a first service request to a core network element based on the first service information; and determines a destination address of the first service, and sends data of the first service based on the destination address of the first service.

In the solution provided in this application, the terminal device may request the first service from a core network, for example, a service such as computing, perception, or data processing, to implement a communication requirement for a new service (for example, the first service).

In a possible implementation, the first service information further includes a correspondence between the identifier of the first service and a session parameter, and the session parameter includes at least one of the following: a data network name (data network name, DNN) and/or slice information, a session type, a service continuity mode, an application identifier, and an access type.

In a possible implementation, sending the first service request to the core network element based on the first service information includes: sending a session establishment or change request message to the core network element, where the session establishment or change request message includes the identifier of the first service and/or the session parameter, or the session establishment or change request message includes first request information, and the first request information includes the identifier of the first service.

In the solution provided in this application, the terminal device may request the first service from the core network. Specifically, the terminal device may send the session establishment or change request message to the core network element, and the core network element establishes, based on the identifier of the first service and/or the session parameter in the session establishment or change request message or based on the identifier of the first service in the session establishment or change request message, a user plane connection that is between a terminal device, an access network device, a user plane network element, and a network element corresponding to the destination address of the first service and that is used for the first service. Therefore, a communication requirement for a new service between the terminal device and the network element corresponding to the destination address of the first service can be implemented.

In a possible implementation, sending the first service request to the core network element based on the first service information includes: sending third request information or fourth request information to the core network element, where the third request information or the fourth request information includes the identifier of the first service and information about an established session, and the information about the established session includes at least one of an identifier of the session, an identifier of the terminal device, or an address of the terminal device.

In the solution provided in this application, the terminal device may request the first service from the core network. Specifically, the terminal device may send the third request information or the fourth request information to the core network element, and the core network element establishes, based on the identifier of the first service and the information about the established session in the third request information or the fourth request information, a user plane connection that is between the terminal device, an access network device, a user plane network element, and a network element corresponding to the destination address of the first service and that is used for the first service. Therefore, a communication requirement for a new service between the terminal device and the network element corresponding to the destination address of the first service can be implemented.

In a possible implementation, sending the first service request to the core network element based on the first service information includes: sending third request information or fourth request information to the core network element, where the third request information or the fourth request information includes the identifier of the first service and a session establishment or change request message, and the session establishment or change request message includes the identifier of the first service and/or the session parameter.

In the solution provided in this application, the terminal device may request the first service from the core network. Specifically, the terminal device may send the third request information or the fourth request information to the core network element, and the core network element establishes, based on the identifier of the first service and the session establishment or change request message in the third request information or the fourth request information, a user plane connection that is between a terminal device, an access network device, a user plane network element, and a network element corresponding to the destination address of the first service and that is used for the first service. Therefore, a communication requirement for a new service between the terminal device and the network element corresponding to the destination address of the first service can be implemented.

In a possible implementation, sending the session establishment or change request message to the core network element includes: sending the session establishment or change request message to a session management network element in the core network element.

In a possible implementation, sending the third request information or the fourth request information to the core network element includes: sending the third request information to a first network element in the core network element, or sending the fourth request information to a second network element in the core network element, where the first network element and the second network element are different network elements.

In a possible implementation, determining the destination address of the first service includes: obtaining the destination address of the first service from one or more of the terminal or a policy control function network element, the session management network element, the first network element, or the second network element in the core network element.

In the solution provided in this application, the terminal device may obtain a plurality of destination addresses of the first service, for example, may obtain the destination address of the first service from the first service information, may obtain the destination address of the first service from configuration information of the terminal device (internally pre-configured by the terminal device, for example, pre-configuration information in a SIM card), or may receive destination addresses of the first service sent by the foregoing network elements. When receiving a plurality of destination addresses of the first service, the terminal device may select, based on an agreed priority, a destination address that is of the first service and that is to be used when subsequently transmitting the data of the first service. Accuracy of receiving the destination address of the first services can be improved by receiving a plurality of destination addresses of the first service.

In a possible implementation, the destination address of the first service includes a static destination address, and the static destination address is obtained from one or more of the following: the terminal or the policy control function network element or the first network element in the core network element.

In the solution provided in this application, the static destination address may be understood as not changing with an address of a network element that actually provides the first service. The static address may be pre-configured by the terminal (for example, from pre-configuration information in a SIM card of the terminal), or may be obtained from the policy control function network element or the first network element in the core network element. In other words, from a perspective of the terminal, address information of the network element that provides the first service for the terminal does not need to be dynamically obtained in real time, but the data of the first service is sent to the static destination address of the first service. Another function network element (for example, the UPF) may forward, based on a mapping (correspondence) relationship between the static destination address and a dynamic destination address, the first service to the network element that actually provides the first service (that is, a network element corresponding to the dynamic destination address). In this way, a communication requirement for a new service between the terminal device and the network element corresponding to the destination address of the first service can be implemented.

In a possible implementation, the destination address of the first service includes a dynamic destination address, and the dynamic destination address is obtained from one or more of the first network element or the second network element.

In the solution provided in this application, the dynamic destination address may be understood as changing with an address of a network element that actually provides the first service, so that a communication requirement for a new service between the terminal device and the network element corresponding to the destination address of the first service can be implemented.

According to a second aspect, this application provides a communication system. The communication system may include a first network element and a network element corresponding to a destination address of a first service.

The first network element is configured to determine the network element corresponding to the destination address of the first service.

The network element corresponding to the destination address of the first service is configured to execute the first service.

In the solution provided in this application, the network element corresponding to the destination address of the first service (a network element that provides the first service for a terminal device) is newly added to a user plane system architecture, to complete a user plane connection between the terminal device, an access network device, a user plane network element, and the network element corresponding to the destination address of the first service. The first network element is added to a control plane, so that the first network element controls the network element corresponding to the destination address of the first service. This is different from adding management functions of different services to an SMF network element, and therefore scalability and flexibility of a mobile network can be improved.

In a possible implementation, the communication system further includes a policy control function network element, and that the first network element determines the network element corresponding to the destination address of the first service specifically includes:

The first network element obtains, from a policy control function network element, an execution policy corresponding to the first service; and
the first network element determines, based on the execution policy corresponding to the first service, the network element corresponding to the destination address of the first service.

In the solution provided in this application, the first network element determines the network element corresponding to the destination address of the first service. Specifically, the network element corresponding to the destination address of the first service may be determined based on the execution policy that corresponds to the first service and that is obtained from the policy control function network element.

In a possible implementation, the communication system further includes a session management network element.

The session management network element is configured to send second request information to the first network element, where the second request information includes an identifier of the first service.

In the solution provided in this application, the terminal device may send a session establishment or change request message to the session management network element. After receiving the session establishment or change request message from the terminal device, the session management network element may establish or change a user plane connection that is between the terminal device, the access network device, and the user plane network element and that is used for the first service. Based on this, the session management network element may determine the second request information based on the identifier of the first service and/or the session parameter included in the session establishment or change request message from the terminal device, and send the second request information to the first network element, to request the first network element to re-establish a connection between the user plane network element and the network element corresponding to the destination address of the first service. In this way, the terminal device, the access network device, the user plane network element, and the network element corresponding to the destination address of the first service can be connected, and a communication requirement for a new service between the terminal device and the network element corresponding to the destination address of the first service can be implemented.

In a possible implementation, the communication system further includes a session management network element. The first network element is further configured to send a session establishment or change request message to the session management network element, where the session establishment request message includes an identifier of the first service and/or a session parameter, and the session change request message may include one or more of the identifier of the first service, a parameter of a session established by a terminal device, and an identifier of the session established by the terminal device.

In the solution provided in this application, the terminal device may send third request information to the first network element. After receiving the third request information from the terminal device, the first network element may send a session establishment or change request message to the session management network element to request the session management network element to establish or change a user plane connection that is between the terminal device, the access network device, and the user plane network element and that is used for the first service. Based on this, the first network element may establish, based on the identifier of the first service in the third request information, the connection between the user plane network element and the network element corresponding to the destination address of the first service. In this way, the terminal device, the access network device, the user plane network element, and the network element corresponding to the destination address of the first service can be connected, and a communication requirement for a new service between the terminal device and the network element corresponding to the destination address of the first service can be implemented.

In a possible implementation, the session management network element is further configured to send information about the terminal device and an address of a user plane network element to the first network element, where the terminal device and the user plane network element are configured to carry a session corresponding to the first service, and the information about the terminal device includes at least one of an identifier of the terminal device or an address of the terminal device.

In the solution provided in this application, after establishing the session corresponding to the first service, the SMF network element may determine the information about the terminal device and the address of the UPF network element, and send the information about the terminal device and the address of the UPF network element to the first network element. The terminal device and the UPF network element are configured to carry the session corresponding to the first service. In this way, the terminal device, the access network device, the user plane network element, and the network element corresponding to the destination address of the first service can be connected, and a communication requirement for a new service between the terminal device and the network element corresponding to the destination address of the first service can be implemented.

In a possible implementation, the session management network element is further configured to obtain, from the policy control function network element, a session related policy corresponding to the first service.

In a possible implementation, the communication system further includes a user plane network element.

The first network element is further configured to send the destination address of the first service to the session management network element.

The session management network element is further configured to send the destination address of the first service to the user plane network element.

In the solution provided in this application, the first network element sends the destination address of the first service to the session management network element, and the session management network element sends the destination address of the first service to the user plane network element, so that the user plane network element can be connected to the network element corresponding to the destination address of the first service. In this way, the terminal device, the access network device, the user plane network element, and the network element corresponding to the destination address of the first service are connected, and a communication requirement for a new service between the terminal device and the network element corresponding to the destination address of the first service can be implemented.

In a possible implementation, the communication system further includes a second network element and a policy control function network element.

The second network element is configured to obtain, from the policy control function network element, a policy corresponding to the first service, where the policy corresponding to the first service includes an execution policy corresponding to the first service and a session related policy corresponding to the first service.

The second network element is further configured to send fifth request information to the first network element, where the fifth request information includes an identifier of the first service and the execution policy corresponding to the first service.

That the first network element determines the network element corresponding to the destination address of the first service specifically includes:

The first network element determines, based on the execution policy corresponding to the first service in the fifth request information, the network element corresponding to the destination address of the first service.

In the solution provided in this application, the terminal device may interact with a core network via the second network element, to implement a communication requirement for a new service (for example, the first service).

In a possible implementation, the communication system further includes a session management network element and a user plane network element.

The first network element is further configured to send the destination address of the first service to the second network element.

The second network element is configured to send a session establishment or change request message to the session management network element, where the session establishment request message includes the identifier of the first service and/or a session parameter, and the session change request message may include one or more of the identifier of the first service, a parameter of a session established by a terminal device, and an identifier of the session established by the terminal device.

The session management network element is further configured to send information about the terminal device and an address of the user plane network element to the second network element, where the terminal device and the user plane network element are configured to carry a session corresponding to the first service, and the information about the terminal device includes at least one of an identifier of the terminal device or an address of the terminal device.

In a possible implementation, the session parameter includes at least one of the following: a DNN and/or slice information, a session type, a service continuity mode, an application identifier, or an access type.

In a possible implementation, the second network element is further configured to send the information about the terminal device and the address of the user plane network element to the first network element.

The second network element is further configured to send the destination address of the first service to the user plane network element.

In a possible implementation, the first network element is further configured to send configuration information to the network element corresponding to the destination address of the first service, where the configuration information includes at least one of the address of the user plane network element, the identifier of the terminal device, the address of the terminal device, or an execution rule of the first service.

In a possible implementation, the user plane network element is configured to update a user plane address or the destination address of the first service with the first network element.

In a possible implementation, the user plane network element is further configured to send an updated destination address of the first service to the second network element.

According to a third aspect, this application provides a communication method. The method may be applied to a core network element, may be applied to an apparatus (for example, a chip, a chip system, or a circuit) in a core network element, or may be an apparatus that can be used together with the core network element. The following uses an example in which the method is applied to the core network element for description. The core network element may include a first network element, a network element corresponding to a destination address of a first service, a policy control function network element, a session management network element, a user plane network element, a second network element, and the like. The method may include: The first network element determines the network element corresponding to the destination address of the first service; and the network element corresponding to the destination address of the first service executes the first service.

In the solution provided in this application, the network element corresponding to the destination address of the first service (a network element that provides the first service for a terminal device) is newly added to a user plane system architecture, to complete a user plane connection between the terminal device, an access network device, a user plane network element, and the network element corresponding to the destination address of the first service. The first network element is added to a control plane, so that the first network element controls the network element corresponding to the destination address of the first service. This is different from adding management functions of different services to an SMF network element, and therefore scalability and flexibility of a mobile network can be improved.

It should be understood that the communication method in the third aspect corresponds to the communication system in the second aspect, and specific content corresponds to content in the second aspect. For corresponding features of the third aspect and beneficial effects achieved, refer to descriptions in the second aspect. To avoid repetition, detailed descriptions are appropriately omitted herein.

In a possible implementation, that the first network element determines the network element corresponding to the destination address of the first service includes: The first network element obtains, from the policy control function network element, an execution policy corresponding to the first service; and the first network element determines, based on the execution policy corresponding to the first service, the network element corresponding to the destination address of the first service.

In a possible implementation, the method further includes: The session management network element sends second request information to the first network element, where the second request information includes an identifier of the first service.

In a possible implementation, the method further includes: The first network element sends a session establishment or change request message to the session management network element, where the session establishment request message includes an identifier of the first service and/or a session parameter, and the session change request message may include one or more of the identifier of the first service, a parameter of a session established by a terminal device, and an identifier of the session established by the terminal device.

In a possible implementation, the method further includes: The session management network element sends information about the terminal device and an address of the user plane network element to the first network element, where the terminal device and the user plane network element are configured to carry a session corresponding to the first service, and the information about the terminal device includes at least one of an identifier of the terminal device or an address of the terminal device.

In a possible implementation, the method further includes: The session management network element obtains, from the policy control function network element, a session related policy corresponding to the first service.

In a possible implementation, the method further includes: The first network element sends the destination address of the first service to the session management network element; and the session management network element sends the destination address of the first service to the user plane network element.

In a possible implementation, the method further includes: The second network element obtains, from the policy control function network element, a policy corresponding to the first service, where the policy corresponding to the first service includes an execution policy corresponding to the first service and a session related policy corresponding to the first service; and the second network element sends fifth request information to the first network element, where the fifth request information includes an identifier of the first service and the execution policy corresponding to the first service. That the first network element determines the network element corresponding to the destination address of the first service includes: The first network element determines, based on the execution policy corresponding to the first service in the fifth request information, the network element corresponding to the destination address of the first service.

In a possible implementation, the method further includes: The first network element sends the destination address of the first service to the second network element; the second network element sends a session establishment or change request message to a session management network element, where the session establishment request message includes an identifier of the first service and/or a session parameter, and the session change request message may include one or more of the identifier of the first service, a parameter of a session established by a terminal device, and an identifier of the session established by the terminal device; and the session management network element sends information about the terminal device and an address of a user plane network element to the second network element, where the terminal device and the user plane network element are configured to carry a session corresponding to the first service, and the information about the terminal device includes at least one of an identifier of the terminal device or an address of the terminal device.

In a possible implementation, the session parameter includes at least one of the following: a DNN and/or slice information, a session type, a service continuity mode, an application identifier, or an access type.

In a possible implementation, the method further includes: The second network element sends the information about the terminal device and the address of the user plane network element to the first network element; and the second network element sends the destination address of the first service to the user plane network element.

In a possible implementation, the method further includes: The first network element sends configuration information to the network element corresponding to the destination address of the first service, where the configuration information includes at least one of the address of the user plane network element, the identifier of the terminal device, the address of the terminal device, or an execution rule of the first service.

In a possible implementation, the method further includes: The user plane network element updates a user plane address or the destination address of the first service with the first network element.

In a possible implementation, the method further includes: The user plane network element sends an updated destination address of the first service to the second network element.

According to a fourth aspect, an embodiment of this application provides a communication apparatus. The communication apparatus may be used in a terminal device, may be used in an apparatus (for example, a chip, a chip system, or a circuit) in the terminal device, or may be used in a logical module or software that can implement all or some functions of the terminal device. The communication apparatus has a function of implementing the behavior in the method instance in the first aspect. The function may be implemented by hardware, or may be implemented by hardware executing corresponding software. The hardware or the software includes one or more modules corresponding to the foregoing function. For beneficial effects, refer to descriptions of the first aspect. Details are not described herein again.

According to a fifth aspect, a communication apparatus is provided. The communication apparatus may be the terminal device in the foregoing method embodiments, or may be an apparatus (for example, a chip, a chip system, or a circuit) disposed in the terminal device. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the first aspect or any one of the implementations of the first aspect and that is performed by the terminal device or the apparatus in the terminal device in the foregoing method embodiments.

According to a sixth aspect, this application provides a computer-readable storage medium. The computer-readable storage medium stores computer instructions. When a computer program or the computer instructions are run, a computer is enabled to perform the method according to any one of the first aspect or the possible implementations of the first aspect, or the method according to any one of the third aspect or the possible implementations of the third aspect.

According to a seventh aspect, this application provides a computer program product including executable instructions. When the computer program product runs on a computer, the computer is enabled to perform the method according to any one of the first aspect or the possible implementations of the first aspect, or the method according to the third aspect or the possible implementations of the third aspect.

According to an eighth aspect, this application provides a communication apparatus. The communication apparatus includes a processor, configured to implement the method according to any one of the first aspect or the possible implementations of the first aspect, or the method according to any one of the third aspect or the possible implementations of the third aspect. In a possible implementation, the communication apparatus may further include a memory, configured to store program instructions and/or data. The communication apparatus may be a chip system. The chip system may include a chip, or may include a chip and another discrete device.

According to a ninth aspect, this application provides a communication system, including the terminal device and the core network element according to any one of the foregoing implementations.

According to a tenth aspect, this application provides a communication apparatus, where the communication apparatus is any core network element according to any one of the foregoing implementations, and is configured to implement a function or an execution method of the core network element.

### BRIEF DESCRIPTION OF DRAWINGS

To describe embodiments of this application more clearly, the following briefly describes the accompanying drawings to be used in embodiments. It is clear that persons of ordinary skill in the art can further obtain other drawings based on these accompanying drawings without creative efforts.
FIG. 1 is a diagram of a network architecture of a communication system according to an embodiment of this application;
FIG. 2 is a diagram of a protocol stack according to an embodiment of this application;
FIG. 3 is a diagram of an architecture of a core network user plane according to an embodiment of this application;
FIG. 4 is a diagram of an architecture of another core network user plane according to an embodiment of this application;
FIG. 5 is an interaction diagram of a communication method according to an embodiment of this application;
FIG. 6 is an interaction diagram of another communication method according to an embodiment of this application;
FIG. 7 is an interaction diagram of still another communication method according to an embodiment of this application;
FIG. 8 is an interaction diagram of still another communication method according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of a terminal device according to an embodiment of this application.

### DESCRIPTION OF EMBODIMENTS

The following describes the technical solutions in embodiments of this application with reference to the accompanying drawings in embodiments of this application. The terms "system" and "network" in embodiments of this application may be used interchangeably. Unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between network elements or same items or similar items that provide basically same functions. Persons skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in still some other embodiments" that appear at different places in this specification do not necessarily refer to a same embodiment, but mean "one or more but not all embodiments", unless otherwise specifically emphasized in another manner. The terms "include", "comprise", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

It should be understood that the technical solution in embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation mobile communication (the 5th generation, 5G) system, an NR system, a machine to machine (machine to machine, M2M) system, or another future evolved communication system. This is not limited in embodiments of this application.

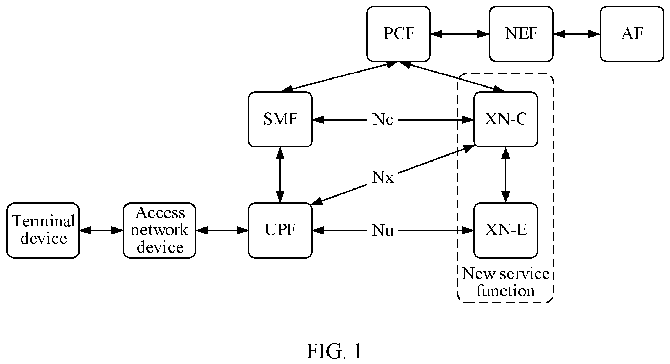

Refer to FIG. 1. FIG. 1 is a diagram of a network architecture of a communication system according to an embodiment of this application. As shown in FIG. 1, the network architecture may include the following devices, network elements, and networks:
1. Terminal device: The terminal device may include various handheld devices, vehicle-mounted devices, wearable devices, or computing devices that have a wireless communication function, or other processing devices connected to a wireless modem, and terminals in various forms, for example, a mobile station (mobile station, MS), a terminal (terminal), user equipment (user equipment, UE), and a soft terminal. For example, the terminal device may be a water meter, an electricity meter, or a sensor.
2. (Radio) Access network (radio access network, RAN) network element: The RAN network element is configured to provide a network access function for authorized terminals in a specific area, and can use transmission tunnels with different quality based on terminal levels, service requirements, and the like. The RAN network element can manage a radio resource and provide an access service for a terminal, to forward a control signal and terminal data between the terminal and a core network. This network element may also be understood as a base station in a conventional network.
   A RAN network element in an NPN network can further control an unauthorized terminal device to attempt to access or select the NPN network.
3. User plane network element: The user plane network element is configured for packet routing and forwarding, quality of service (quality of service, QoS) handling for user plane data, or the like. In a 5G communication system, the user plane network element may be a user plane function (user plane function, UPF) network element. In a future communication system, the user plane network element may still be a UPF network element, or may have another name. This is not limited in this application.
4. Session management network element: The session management network element is mainly configured to perform session management, terminal device internet protocol (internet protocol, IP) address allocation and management, selection and management of a user plane function, termination of interfaces towards policy control and charging functions, downlink data notification, and the like. In a 5G communication system, the session management network element may be a session management function (session management function, SMF) network element. In a future communication system, the session management network element may still be an SMF network element, or may have another name. This is not limited in this application.
5. Policy control network element: The policy control network element is configured to support a unified policy framework to govern network behavior, provide policy rule information to control plane function network elements (for example, an AMF and an SMF network element), and the like. In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be a PCF network element, or may have another name. This is not limited in this application.
6. Network repository network element: The network repository network element is configured to maintain real-time information of all network function entities and their services in a network. In a 5G communication system, the network repository network element may be a network registration function (network repository function, NRF) network element, or may be a network exposure (network exposure function, NEF) network element. In a future communication system, the network repository network element may still be an NRF network element, or may have another name. This is not limited in this application.
7. Application network element: The application network element is configured to perform application influence on traffic routing, access a network exposure function network element, and interact with a policy framework for policy control. In a 5G communication system, the application network element may be an application function (application function, AF) network element. In a future communication system, the application network element may still be an AF network element, or may have another name. This is not limited in this application.
8. First network element: The first network element may be configured to control or manage a new service in a core network architecture of a future mobile network. For example, the first network element may be an XN-C network element. In FIG. 1, an example in which the first network element is an XN-C is used for description. It may be understood that the first network element may also have another name. The name of the first network element is not limited in embodiments of this application.
9. Third network element: The third network element may be configured to execute a new service in a core network architecture of a future mobile network. For example, the third network element may be an XN-E network element. The third network element may correspond to a network element corresponding to a destination address of a first service in embodiments of this application. In FIG. 1, an example in which the third network element is an XN-E is used for description. It may be understood that the third network element may also have another name. The name of the third network element is not limited in embodiments of this application.

Each of the foregoing network elements in the core network may also be referred to as a functional entity, and may be a network element implemented on dedicated hardware, or may be a software instance running on dedicated hardware, or an instance of a virtualization function on an appropriate platform. For example, the virtualization platform may be a cloud platform.

It should be noted that the network architecture shown in FIG. 1 is not limited to including only the network elements shown in the figure, and may further include other devices that are not shown in the figure. Details are not listed one by one in this application. It should be noted that a distribution form of network elements in the core network is not limited in embodiments of this application. The distribution form shown in FIG. 1 is merely an example, and is not limited in this application.

It should be understood that names of all network elements in this application are merely used as examples. In future communication, for example, 6G, names of the network elements may also be referred to as other names. Alternatively, in future communication, for example, 6G, the network elements in this application may be replaced with other entities, devices, or the like that have a same function. This is not limited in this application. Unified descriptions are provided herein, and details are not described below again.

It should be noted that the network architecture shown in FIG. 1 does not constitute a limitation on a 5G network. Optionally, the method in embodiments of this application is further applicable to various future communication systems, for example, 6G or other communication networks. In addition, although not shown in FIG. 1, the communication system may further include another network element, device, network entity, or network subsystem, for example, a binding support function (binding support function, BSF) network element. Details are not described in embodiments of this application.

Optionally, various network elements in embodiments of this application may be communication devices, or may be chips, chip systems, or the like that may be used in the communication devices. The foregoing network elements may be different communication devices, or may be different communication apparatuses, modules, or subsystems in a same communication device. This is not limited in embodiments of this application.

Optionally, the terminal device (terminal) in embodiments of this application may be a device configured to implement a wireless communication function, for example, a terminal device or a chip that may be used in the terminal device. The terminal device may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in autonomous driving (autonomous driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

Optionally, the access network device in embodiments of this application may be an entity configured to transmit or receive a signal, or may be a device configured to communicate with a terminal device. The access network device may be a base transceiver station (base transceiver station, BTS) in a global system for mobile communication (global system for mobile communication, GSM) system or code division multiple access (code division multiple access, CDMA), may be a NodeB (NodeB, NB) in a wideband code division multiple access (wideband code division multiple access, WCDMA) system, may be an evolved NodeB (evolved NodeB, eNB, or eNodeB) in an LTE system, or may be a radio controller in a cloud radio access network (cloud radio access network, CRAN) scenario. Alternatively, the access network device may be a relay station, an access point, a vehicle-mounted device, a wearable device, an access network device in a 5G network, an access network device in a future evolved PLMN network, or the like. This is not limited in embodiments of this application. The access network device may be a device in a wireless network, for example, a radio access network (radio access network, RAN) node that connects a terminal to the wireless network. Currently, some examples of the RAN node are a base station, a next generation NodeB (next generation NodeB, gNB), a transmission reception point (transmission reception point, TRP), an eNB, a home base station, a baseband unit (baseband unit, BBU), or an access point (access point, AP) in a Wi-Fi system.

In embodiments of this application, the terminal device or the access network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by the terminal device, the access network device, or a functional module that can invoke and execute the program and that is in the terminal device or the access network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but not limited to a radio channel, and various other media that can store, contain and/or carry instructions and/or data.

Further, the AMF network element may be referred to as an AMF for short, the SMF network element may be referred to as an SMF for short, and so on. In other words, the AMF described subsequently in this application may be replaced with an access management network element, and the SMF may be replaced with a session management network element. Other network elements are similar.

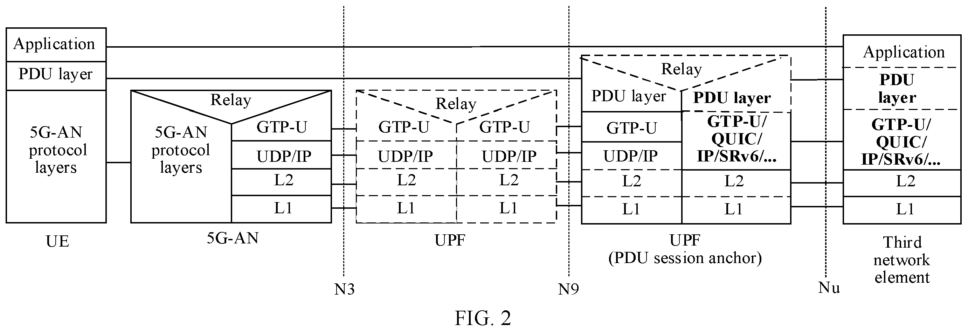

Further, refer to FIG. 2. FIG. 2 is a diagram of a protocol stack according to an embodiment of this application. As shown in FIG. 2, a user plane Nu interface may be newly added, and a routing protocol independent (of N3 and N9) is defined. A transmission protocol between an anchor UPF and an access network device or between the UPF and another UPF may still be used for that between the UPF and a second network element. For example, an existing internet protocol (internet protocol, IP) protocol and a general packet radio service tunneling protocol for the user plane (general packet radio service tunneling protocol for the user plane, GTP-U) protocol are still used. Alternatively, communication may be performed by using a separate transmission protocol. To be specific, a transmission protocol is used between the UPF and the access network device or between the UPF and the another UPF, and another transmission protocol is used between the UPF and the second network element, for example, segment routing over internet protocol version 6 (internet protocol version 6, IPv6) (segment routing over IPv6, SRv6), or user datagram protocol (user datagram protocol, UDP) based low-latency Internet transport layer protocol (quick UDP internet connection, QUIC).

For ease of understanding embodiments of this application, the following first describes a plurality of technical solutions included in an implementation of adding a computing function to a mobile network. The following provides an example for description.

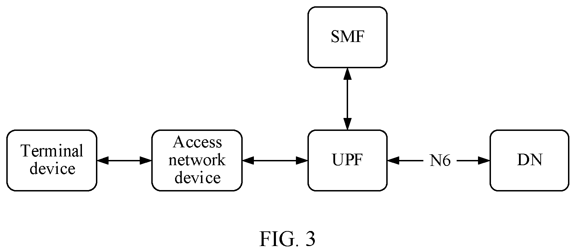

Refer to FIG. 3. FIG. 3 is a diagram of an architecture of a core network user plane according to an embodiment of this application. As shown in FIG. 3, a mobile network may establish a transmission channel for a user, so that data packets of various different services are quickly and reliably transmitted between the user and a DN.

In a development process of the mobile network, for example, in development of a future 6G network, the mobile network not only may provide a connection service but may also provide additional services such as computing, perception, and data processing. These services may be used as independent functions in a core network to provide corresponding services for users.

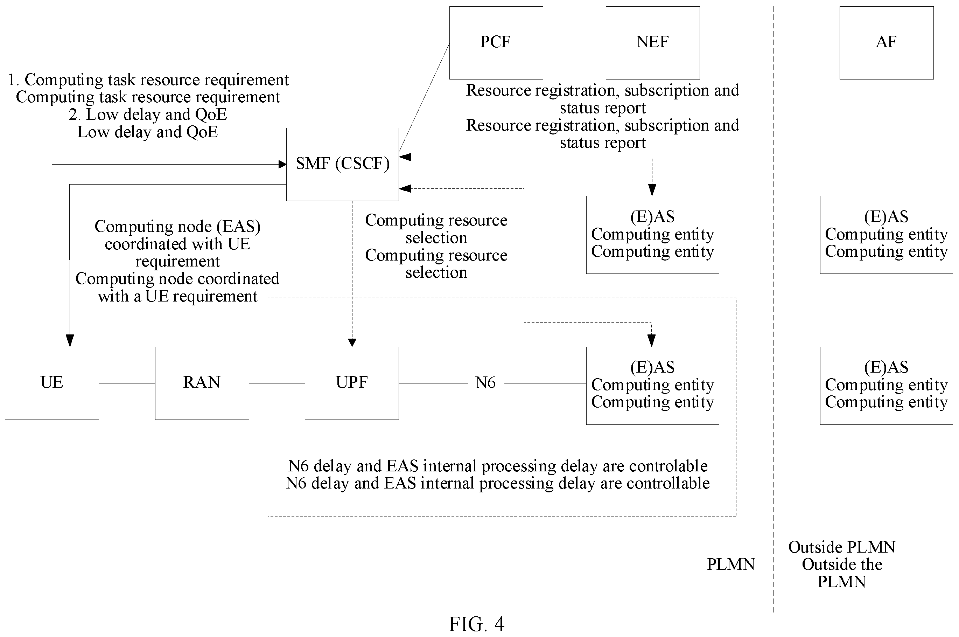

Refer to FIG. 4. FIG. 4 is a diagram of an architecture of another core network user plane according to an embodiment of this application. As shown in FIG. 4, the network architecture may include network elements such as a terminal device, a RAN, an SMF, a UPF, a PCF, an NEF, and an AF. For example, to add the foregoing additional services to a mobile network, a computing entity may be directly added to the core network user plane, and is directly connected to the UPF through an N6 interface. The entity may be controlled by the SMF network element. To be specific, a computing resource management service may be newly integrated into the SMF network element, to manage both the computing entity on the user plane and a connected UPF network element.

Although the SMF network element is reconfigured, and the computing resource management service is added, so that the SMF network element in the core network can flexibly schedule user plane computing power, the terminal device needs to select a specific SMF network element when using a computing power service. Therefore, integration and reconfiguration of the SMF network element greatly reduce flexibility of a control plane. In addition, for other new services such as data processing and a perception service introduced in a future network, more independent services may be deployed on the user plane. If management functions of different services are added to an SMF network element still on the control plane, it is not conducive to addition of a new service and subsequent management and maintenance, and scalability is poor.

In terms of the problems of low flexibility and poor scalability of the control plane, an embodiment of this application provides a communication method, to implement a communication requirement for a new service (for example, a first service). A network element corresponding to a destination address of the first service (for example, a network element that provides the first service for a terminal device) is newly added to a user plane system architecture, to complete a user plane connection between the terminal device, the access network device, the user plane network element, and the network element corresponding to the destination address of the first service. A first network element is added to the control plane, so that the first network element controls the network element corresponding to the destination address of the first service, and there is no need to add management functions of different services to an SMF network element. Therefore, scalability and flexibility of the mobile network can be improved.

This application provides a communication method. The following separately describes the communication method by using the following embodiments. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

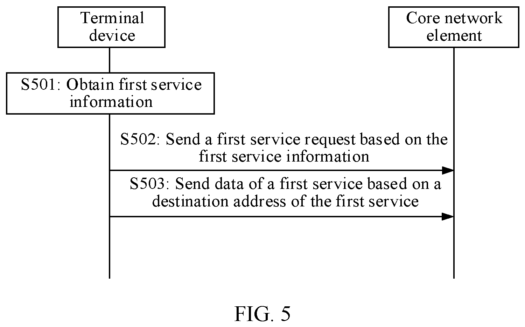

In embodiments (for example, the following embodiments corresponding to FIG. 5 to FIG. 8) of this application, the method may be illustrated by using an example in which a terminal device and a core network device are used as execution bodies for interaction illustration. The core network device may include a session management network element (for example, an SMF network element), a user plane network element (for example, a UPF network element), a first network element, a second network element, a network element corresponding to a destination address of a first service, a policy control function network element (for example, a PCF network element), and an application function network element (for example, an AF network element). The following uses an SMF network element, a UPF network element, a PCF network element, an AF network element, and the like as examples for description, and names of these network elements are not limited substantially. In addition, an execution body of the interaction illustration is not limited in this application. For example, the terminal device may alternatively be a chip, a chip system, or a processor that supports the terminal device in implementing the method, or may be a logical module or software that can implement all or some functions of the terminal device, and the core network device may alternatively be a chip, a chip system, or a processor that supports the core network device in implementing the method, or may be a logical module or software that can implement all or some functions of the core network device. Embodiments of this application are uniformly described herein, and details are not described below again.

In a possible implementation, the first network element and the network element corresponding to the destination address of the first service may be separately deployed or jointly deployed. Subsequent embodiments are described based on an implementation of separate deployment of the first network element and the network element corresponding to the destination address of the first service. If the first network element and the network element corresponding to the destination address of the first service are jointly deployed, a procedure may be further simplified. To be specific, interaction between the first network element and the network element corresponding to the destination address of the first service may be implemented internally.

The destination address of the first service may be classified into two types: One type is a static destination address, and the other type is a dynamic destination address. The static destination address may be understood as not changing with an address of a network element that actually provides the first service, and the dynamic destination address may be understood as changing with the address of the network element that actually provides the first service. The static destination address may be pre-configured by the terminal (for example, from pre-configuration information in a SIM card of the terminal), or may be obtained from the policy control function network element or the first network element in the core network element. In other words, from a perspective of the terminal device, address information of a network element that provides the first service for the terminal device does not need to be dynamically obtained in real time, but data of the first service is sent to the static destination address of the first service. Another function network element (for example, the UPF) may forward, based on a mapping relationship between the static destination address and a dynamic destination address, the data of the first service to the network element that actually provides the first service (that is, a network element corresponding to the dynamic destination address).

The following describes a communication method provided in embodiments of this application. Refer to FIG. 5. FIG. 5 is an interaction diagram of a communication method according to an embodiment of this application. As shown in FIG. 5, the communication method may include at least the following steps.

S501: A terminal device obtains first service information.

The first service information includes an identifier of the first service. The identifier of the first service may be a service ID or a task ID related to computing or data. Optionally, a task may include both a computing service and a data service.

The first service information may further include a correspondence between the identifier of the first service and a session parameter. The session parameter may include at least one of the following: a data network name (data network name, DNN) and/or slice (slice) information, a session type, a service continuity mode, an application identifier (APP ID), and an access type. Specifically, the correspondence between the identifier of the first service and the session parameter may be used as a part of a user policy configured by a PCF, and the correspondence between the identifier of the first service and the APP ID or the DNN and/or the slice information may also be used as one of terminal device route selection policies (UE route selection policies, URSPs).

Optionally, the first service information further includes a destination address of the first service. The destination address of the first service herein may be understood as the foregoing static destination address.

S502: The terminal device sends a first service request to a core network element based on the first service information. Correspondingly, the core network element receives the first service request from the terminal device.

The terminal device may send the first service request to the core network element based on the first service information in any one of the following implementations:
In a first possible implementation, the terminal device sends a session establishment or change request message to the core network element. Specifically, the terminal device may send the session establishment or change request message to a session management network element in the core network element. The session establishment or change request message includes the identifier of the first service and/or the session parameter, or the session establishment or change request message includes first request information, and the first request information includes the identifier of the first service.
In a second possible implementation, the terminal device sends third request information to the core network element. Specifically, the terminal device may send the third request information to a first network element in the core network element. The third request information includes the identifier of the first service and information about an established session, and the information about the established session includes at least one of an identifier of the session, an identifier of the terminal device, or an address of the terminal device; or the third request information includes the identifier of the first service and a session establishment or change request message.
In a third possible implementation, the terminal device sends fourth request information to the core network element. Specifically, the terminal device may send the fourth request information to a second network element in the core network element. The fourth request information includes the identifier of the first service and information about an established session, and the information about the established session includes at least one of an identifier of the session, an identifier of the terminal device, or an address of the terminal device; or the fourth request information includes the identifier of the first service and a session establishment or change request message.

S503: The terminal device sends data of the first service to the core network element based on the destination address of the first service. Correspondingly, the core network element receives the data of the first service from the terminal device.

In S503, the terminal device sends the data of the first service to the core network element based on the destination address of the first service. The destination address of the first service herein may be the foregoing static destination address, or may be a dynamic destination address. A manner of obtaining the static destination address is described above, and details are not described herein again. Manners of obtaining the dynamic destination address include one or more of the following: (1) An SMF sends the dynamic destination address (that is, an address of an actual network element providing the first service) of the first service to the terminal device. (2) A UPF sends the dynamic destination address of the first service to the terminal device. (3) If the dynamic destination address of the first service changes, the UPF may further send an updated destination address of the first service to the terminal device. (4) The first network element sends the dynamic destination address of the first service to the terminal device. (5) The second network element sends the dynamic destination address of the first service to the terminal device.

Optionally, if the terminal device obtains a plurality of destination addresses (including a static destination address and/or a dynamic destination address) of the first service, the terminal device may determine, based on priorities of the plurality of destination addresses, a finally used destination address to transmit the data of the first service. For example, a priority of the dynamic address is higher than that of the static address. A specific implementation is not limited in this application.

In this embodiment, the terminal device may request the first service from a core network, for example, a service such as computing, perception, or data processing, to implement a communication requirement for a new service (for example, the first service).

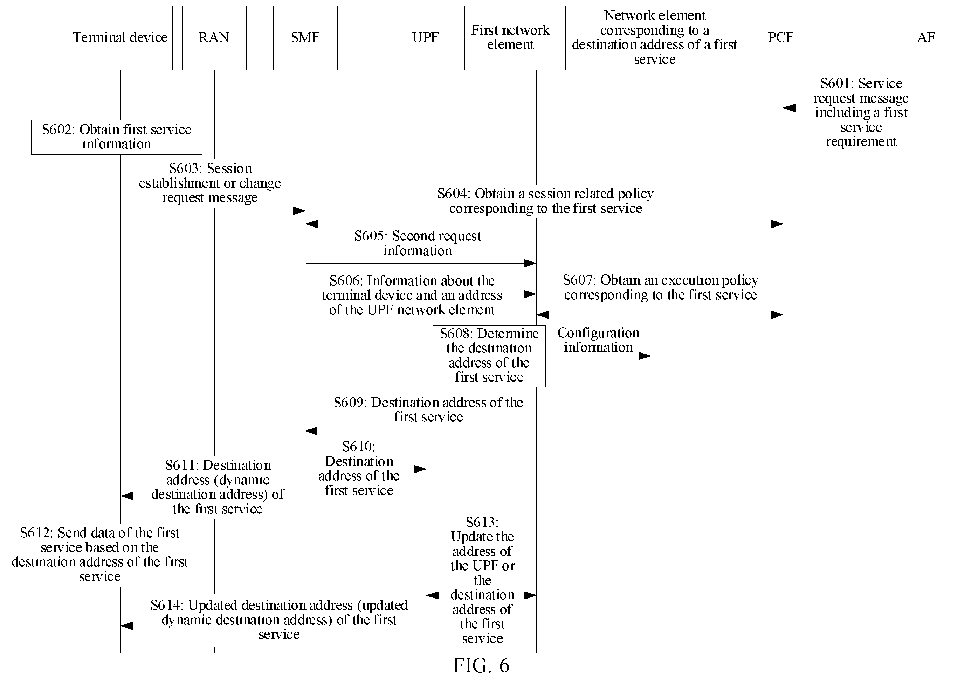

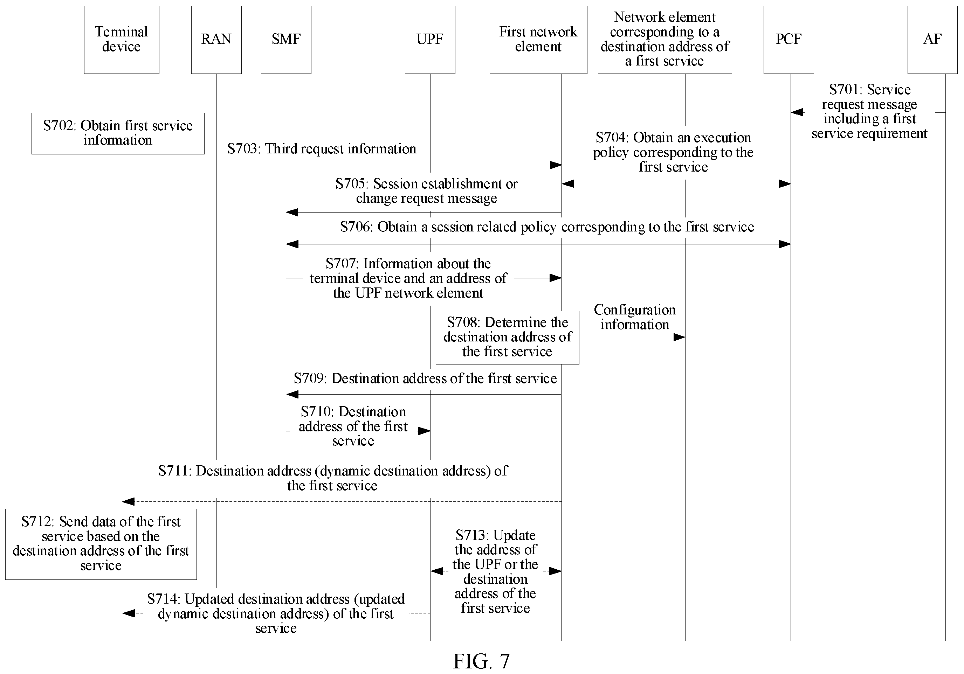

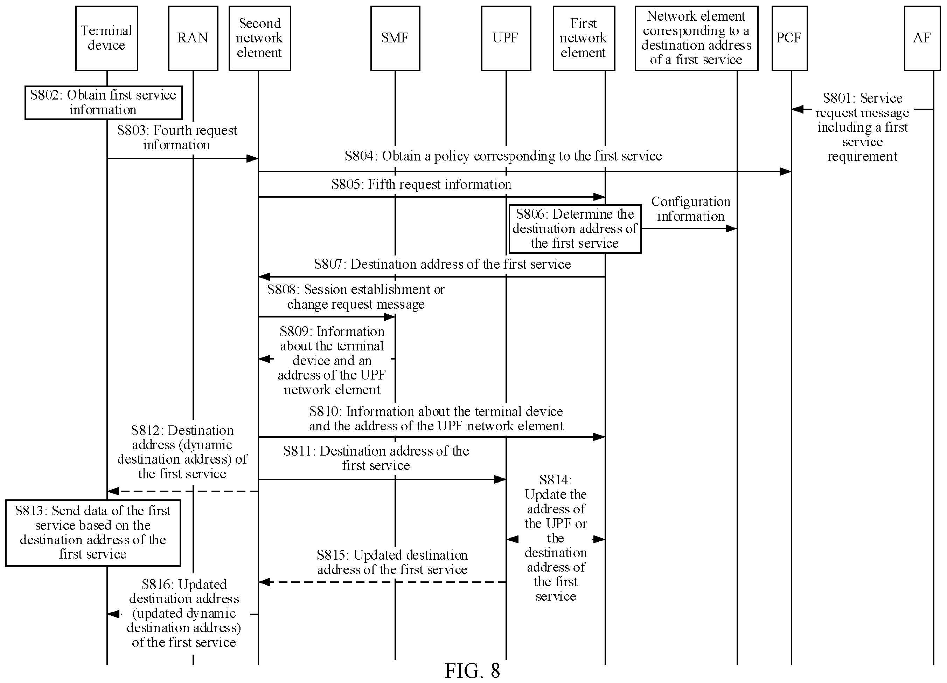

For some specific implementations and beneficial effects of the method embodiment shown in FIG. 5, refer to the following descriptions of FIG. 6 to FIG. 8. In other words, the embodiments shown in FIG. 6 to FIG. 8 are specific implementations of the embodiment shown in FIG. 5. To avoid redundancy, details are not described in the embodiment in FIG. 5. The method embodiment in FIG. 6 may correspond to the first possible implementation of step S502 in which the terminal device sends the first service request to the core network element based on the first service information. The method embodiment in FIG. 7 may correspond to the second possible implementation of step S502 in which the terminal device sends the first service request to the core network element based on the first service information. The method embodiment in FIG. 8 may correspond to the third possible implementation of step S502 in which the terminal device sends the first service request to the core network element based on the first service information.

The following describes another communication method provided in an embodiment of this application. Refer to FIG. 6. FIG. 6 is an interaction diagram of another communication method according to an embodiment of this application. As shown in FIG. 6, the communication method may include at least the following steps. Steps S611, S613, and S614 are optional steps.

S601: An AF network element sends a service request message including a first service requirement to a PCF network element. Correspondingly, the PCF network element receives the service request message from the AF network element.

The AF network element may send the service request message to a network side. For example, the AF network element may send the service request message to the PCF network element.

In a possible implementation, the AF network element is an untrusted network element or a network element (for example, a third-party application server) deployed by a third party, and the AF network element may send the service request message to the PCF network element via an NEF network element. Specifically, the AF network element may send the service request message to the NEF network element, and the NEF network element forwards the service request message to the PCF network element. Alternatively, the NEF network element may store the service request message in a UDR, and then the PCF network element may obtain the service request message from the UDR.

In another possible implementation, if the AF network element is a trusted network element, the AF network element directly sends the service request message to the PCF network element, without a need of forwarding via an NEF network element.

The service request message includes the first service requirement. The first service requirement may be a new service requirement proposed in addition to a 5G system service requirement, for example, a computing service requirement (a computing resource requirement, such as CPU computing power, a memory quantity, use duration, and computing precision), a perception service requirement (such as a perception range, perception precision, and perception area information), and a data service request (such as a data amount, user information related to data, and a data type). Optionally, the service request message may further include a service identifier (for example, an AF ID or an APP ID) and a service requirement (for example, a QoS requirement).

S602: A terminal device obtains first service information.

After the AF network element sends the service request message to the PCF network element, the PCF network element may configure a user policy for the terminal device. The user policy includes the first service requirement. The terminal device may obtain the first service information based on the first service requirement. Specifically, the terminal device may obtain the first service information from the PCF network element.

The first service information includes an identifier of a first service.

The first service information may further include a correspondence between the identifier of the first service and a session parameter.

The first service information may further include a destination address of the first service. The destination address of the first service herein may be understood as a static destination address.

It should be noted that for specific descriptions of content included in the first service information, refer to the foregoing embodiment. Details are not described herein again.

S603: The terminal device sends a session establishment or change request message to an SMF network element. Correspondingly, the SMF network element receives the session establishment or change request message from the terminal device.

For example, if an APP (an APP corresponding to an APP ID) on the terminal device needs to use the first service (corresponding to the identifier of the first service), the terminal device selects a corresponding session parameter based on a correspondence between the identifier of the first service and the session parameter in the first service information (for example, based on a user policy or a URSP), to send the session establishment or change request message to the SMF network element.

The session may be understood as a session corresponding to the first service, and the session may be for establishing a user plane connection that is between the terminal device, an access network device, and a UPF network element and that is for executing the first service.

In a possible implementation, the session establishment or change request message may include the identifier of the first service and/or the session parameter. Specifically, the session establishment or change request message includes the identifier of the first service, the session establishment or change request message includes the session parameter, or the session establishment or change request message includes the identifier of the first service and the session parameter.

In another possible implementation, the session establishment or change request message may include first request information, and the first request information may include the identifier of the first service.

Further, optionally, to identify personal information of the terminal device in the first service, the terminal device may include identification information of the terminal device in the session establishment or change request message. The identification information may be a user identifier such as a subscription permanent identifier (subscription permanent identifier, SUPI) or a generic public subscription identifier (generic public subscription identifier, GPSI), or may be a temporary identifier allocated by a network side (for example, an access network device or a core network device) to the terminal device for a currently requested service. For example, if the first service is a computing service, the terminal device may add, when requesting the computing service, a corresponding temporary identifier used for the computing service. The identifier may be configured by the PCF network element for the terminal device as a part of the user policy in step S602, or may be subsequently allocated by a first network element or a network element corresponding to the destination address of the first service to the terminal device.

It may be understood that the session establishment or change request message sent by the terminal device to the SMF network element may be forwarded by another network element, for example, an AMF network element.

S604: The SMF network element obtains, from the PCF network element, a session related policy corresponding to the first service.

The session related policy corresponding to the first service may be understood as a data transmission related policy for transmitting the first service.

The policy may include information such as a QoS policy (transmission bandwidth, delay segmentation, a data transmission priority, and the like), a charging policy, and a data packet forwarding policy for data transmission of the first service between the terminal device and a user plane function. The QoS policy is that QoS of a connection transmission meets a data transmission requirement of the first service, and the delay segmentation means that a data transmission delay (that is, a transmission delay between the terminal device and the network element corresponding to the destination address of the first service) of the first service may be divided into a transmission delay between the terminal device and the UPF network element and a transmission delay between the UPF network element and the network element corresponding to the destination address of the first service. For example, if the data transmission delay of the first service is 50 milliseconds, the transmission delay between the terminal device and the UPF network element is 40 milliseconds, and the transmission delay between the UPF network element and the network element corresponding to the destination address of the first service is 10 milliseconds. In this case, the data transmission delay of the first service from the UE to the UPF in the session policy obtained by the SMF is 40 milliseconds. The charging policy may include a charging reporting triggering mechanism (for example, reporting at a specific moment or reporting when a task is completed), a charging measurement manner, and the like.

The session related policy corresponding to the first service may further include the correspondence between the session parameter and the identifier of the first service, and the session parameter is for establishing the session corresponding to the first service.

Specifically, the SMF network element may send, to the PCF network element, request information for requesting the session related policy corresponding to the first service. The request information may include the identifier of the first service and/or the session parameter. The PCF network element may send, based on the identifier of the first service and/or the session parameter in the request information, the session related policy corresponding to the first service to the SMF network element. For example, when the request information includes the identifier of the first service, the PCF network element may determine, based on the identifier of the first service, the session related policy corresponding to the first service, and send, to the SMF network element, the session related policy that corresponds to the first service and that includes the correspondence between the identifier of the first service and the session parameter. Alternatively, when the request information includes the session parameter, the PCF network element may determine the identifier of the first service based on the correspondence between the session parameter and the identifier of the first service, determine, based on the identifier of the first service, the session related policy corresponding to the first service, and send, to the SMF network element, the session related policy that corresponds to the first service and that includes the correspondence between the identifier of the first service and the session parameter. Alternatively, when the request information includes the identifier of the first service and the session parameter, the PCF network element may determine, based on the identifier of the first service, the session related policy corresponding to the first service, and send, to the SMF network element, the session related policy that corresponds to the first service and that includes the correspondence between the identifier of the first service and the session parameter.

In a possible implementation, the PCF network element may configure based on a local policy, or obtain from the UDR, a session related policy corresponding to the first service, and feed back the session related policy to the SMF network element.

In addition, the SMF network element may also obtain, from a subscription management network element or a data repository network element (for example, a UDM or the UDR), subscription data related to the first service of the terminal device, for example, including whether the terminal device is allowed to use the first service.

After receiving the session related policy corresponding to the first service from the PCF network element, the SMF network element may establish, based on the identifier of the first service and/or the session parameter and the correspondence between the session parameter and the identifier of the first service in the policy, the session corresponding to the first service. For example, the session corresponding to the first service may be a protocol data unit (protocol data unit, PDU) session corresponding to the first service. It may be understood that the PDU session is used for the first service or is for carrying the first service.

S605: The SMF network element sends second request information to the first network element. Correspondingly, the first network element receives the second request information from the SMF network element.

After receiving the session establishment or change request message from the terminal device, the SMF network element may establish or change the user plane connection that is between the terminal device, the access network device, and the UPF network element and that is used for the first service. Based on this, the SMF network element may request the first network element to re-establish a connection between the UPF network element and the network element corresponding to the destination address of the first service, so that the terminal device, the access network device, the UPF network element, and the network element corresponding to the destination address of the first service can be connected.

That the SMF network element requests the first network element to re-establish the connection between the UPF network element and the network element corresponding to the destination address of the first service is specifically implemented as: The SMF network element may determine the second request information based on the identifier of the first service and/or the session parameter included in the session establishment or change request message that is from the terminal device. For example, when the session establishment or change request message includes the identifier of the first service, the SMF network element may send the second request information to the first network element based on the identifier of the first service. For example, when the session establishment or change request message includes the session parameter, the SMF network element may determine the identifier of the first service based on a locally pre-configured correspondence between the session parameter and the identifier of the first service or the correspondence between the session parameter and the identifier of the first service in the policy from the PCF, and send the second request information to the first network element based on the identifier of the first service. For example, when the session establishment or change request message includes the identifier of the first service and the session parameter, the SMF network element may send the second request information to the first network element based on the identifier of the first service.

Alternatively, the SMF network element determines, based on the first request information included in the session establishment or change request message from the terminal device, to send the second request information.

The second request information is for requesting the first service, and the second request information may include the identifier of the first service.

S606: The SMF network element sends information about the terminal device and an address of the UPF network element to the first network element. Correspondingly, the first network element receives the information about the terminal device and the address of the UPF network element from the SMF network element.

After establishing the session corresponding to the first service, the SMF network element may determine the information about the terminal device and the address of the UPF network element, and send the information about the terminal device and the address of the UPF network element to the first network element. The terminal device and the UPF network element are configured to carry the session corresponding to the first service. The information about the terminal device includes at least one of an identifier (for example, a permanent or temporary ID of the terminal device) of the terminal device or an address (for example, an IP address or a MAC address) of the terminal device.

That the SMF network element may send the information about the terminal device and the address of the UPF network element to the first network element in any one of the following implementations:
In a possible implementation, the SMF network element may separately send the information about the terminal device and the address of the UPF network element to the first network element by using two messages.

In a possible implementation, the SMF network element may send the information about the terminal device and the address of the UPF network element to the first network element by using one message.

In a possible implementation, the information about the terminal device may be carried in the second request information in step S605.

In a possible implementation, the address of the UPF network element may be carried in the second request information in step S605.

In a possible implementation, both the information about the terminal device and the address of the UPF network element may be carried in the second request information in step S605.

S607: The first network element obtains, from the PCF network element, an execution policy corresponding to the first service.

The execution policy corresponding to the first service may be understood as a related policy for processing or executing the first service. The execution policy corresponding to the first service may have different meanings based on specific service content provided by the first service. For example, if the first service is a computing service, the execution policy corresponding to the first service may include a processor scale (for example, a processor configuration and a quantity of processors), a speed, a computing model, execution time, and the like of the computing service. If the first service is a data service, the execution policy corresponding to the first service may include a data processing mode, a data storage capacity, and the like of the data service. If the first service is a perception service, the execution policy corresponding to the first service may include perception precision, a perception range, and the like of the perception service. It may be understood that in specific implementation, the first service may not be limited to the foregoing service content. In addition, the execution policy corresponding to the first service may not be limited to including the foregoing content, and may further include data transmission QoS (for example, a data transmission speed and delay of the first service of the network element corresponding to the destination address of the first service), a charging policy, and the like of the first service. The data transmission QoS and the charging policy may correspond to the QoS policy and the charging policy in the session related policy corresponding to the first service in step S604. For example, same transmission bandwidth, a same data transmission priority, a same charging reporting triggering mechanism, and a same charging measurement manner are used.

After receiving the second request information from the SMF network element, the first network element may send, to the PCF network element based on the identifier of the first service in the second request information, request information for requesting the execution policy corresponding to the first service. The request information may include the identifier of the first service. The PCF network element may send, based on the request information, the execution policy corresponding to the first service to the first network element. Specifically, the PCF network element may configure based on a local policy, or obtain from the UDR, the execution policy corresponding to the first service, and feed back the execution policy to the first network element. Corresponding to step S604, a transmission policy between the UPF network element and the network element corresponding to the destination address of the first service may also be configured by the PCF network element for the first network element. The QoS policy is similar to the descriptions of S604, and a corresponding transmission policy is the transmission policy between the UPF network element and the network element corresponding to the destination address of the first service. For example, processing of the delay segmentation is that, if the data transmission delay of the first service is 50 milliseconds, the transmission delay between the terminal device and the UPF network element is 40 milliseconds, and the transmission delay between the UPF network element and the network element corresponding to the destination address of the first service is 10 milliseconds. Herein, the transmission delay between the UPF network element and the network element corresponding to the destination address of the first service may be controlled by the first network element.

In addition, the first network element may also obtain, from the subscription management network element or the data repository network element (for example, the UDM or the UDR), subscription data related to the first service of the terminal device, for example, including whether the terminal device is allowed to use the first service, and a first service level (for example, a computing power capability of a computing service and a storage capacity of a data service) that can be used by the terminal device.

S608: The first network element determines the destination address of the first service, and sends configuration information.

The first network element may select or determine, based on the execution policy corresponding to the first service, a network element that provides the first service for the terminal device, that is, the destination address of the first service. In an embodiment, the first network element may be referred to as an XN-C network element, and the network element corresponding to the destination address of the first service may be referred to as an XN-E network element. Names of the first network element and the network element corresponding to the destination address of the first service are not limited in this embodiment.

After determining the destination address of the first service, the first network element may send the configuration information to the network element corresponding to the destination address of the first service. The configuration information may include at least one of the address of the UPF network element, the identifier of the terminal device, the address of the terminal device, or an execution rule of the first service. The execution rule of the first service may be generated by the first network element based on the execution policy that corresponds to the first service and that is obtained in step S607. The execution rule of the first service is an execution rule used by the network element corresponding to the destination address of the first service to provide a user with the first service, for example, a processor scale (for example, a processor configuration and a quantity of processors), a speed, a computing model, execution time, and the like for providing a computing service, a data processing mode, a data storage capacity, and the like for providing a data service, perception precision, a perception range, and the like of a perception service, and data transmission QoS of the first service (for example, a data transmission speed and delay of the first service of the network element corresponding to the destination address of the first service). In addition, the execution rule may further include a charging related rule, for example, a charging reporting triggering mechanism (for example, reporting at a specific moment or reporting when a task is completed).

S609: The first network element sends the destination address of the first service to the SMF network element. Correspondingly, the SMF network element receives the destination address of the first service from the first network element.

After the first network element selects, based on the policy corresponding to the first service, the network element that provides the first service for the terminal device, that is, the network element corresponding to the destination address of the first service, the first network element may send the destination address of the first service to the SMF network element. For example, the destination address of the first service may be at least one of identification information, address information, or domain information of the network element corresponding to the destination address of the first service. In this way, the SMF network element subsequently sends the destination address of the first service to the terminal device, to establish data communication of the first service between the terminal device and the network element corresponding to the destination address of the first service.

Optionally, in addition to sending the destination address of the first service to the SMF network element, the first network element may further send an address of the first network element to the SMF network element. Correspondingly, the SMF network element receives the destination address of the first service and the address of the first network element. The address of the first network element may be address information such as an IP address, a port number, or a fully qualified domain name (fully qualified domain name, FQDN) of the first network element.

Optionally, the first network element may configure a static destination address of the first service for the terminal device, and send a correspondence between the static destination address of the first service and a dynamic destination address of the first service to the SMF network element. Alternatively, when obtaining the execution policy corresponding to the first service from the PCF network element, the first network element may further obtain a correspondence between a static destination address of the first service and a dynamic destination address of the first service, and send the correspondence between the static destination address of the first service and the dynamic destination address of the first service to the SMF network element.

S610: The SMF network element sends the destination address of the first service to the UPF network element. Correspondingly, the UPF network element receives the destination address of the first service from the SMF network element.

The SMF network element may send the destination address of the first service to the UPF network element, so that the UPF network element can establish a connection to the network element corresponding to the destination address of the first service. In a possible implementation, the SMF network element obtains, from the PCF network element, the session related policy corresponding to the first service, where the policy may include a data packet forwarding rule. Alternatively, the SMF network element generates a data packet forwarding rule based on the session related policy corresponding to the first service. When sending the data packet forwarding rule to the UPF network element, the SMF network element may include the destination address of the first service in the data packet forwarding rule, so that the SMF network element sends the destination address of the first service to the UPF network element. For example, a data packet destination interface (destination interface) in the data packet forwarding rule may be set to "first service".

Optionally, in addition to the destination address of the first service, the SMF network element may further send the address of the first network element to the UPF network element. Correspondingly, the UPF network element receives the destination address of the first service and the address of the first network element. The UPF network element may establish, based on the destination address of the first service, the connection to the network element corresponding to the destination address of the first service.

The connection between the UPF network element and the network element corresponding to the destination address of the first service may be a connection based on a protocol such as a general packet radio service (general packet radio service, GPRS) tunneling protocol for the user plane (GPRS tunnelling protocol for the user plane, GTP-U), an IP protocol, or SRv6. A manner of connection between the UPF network element and the network element corresponding to the destination address of the first service is not limited in this embodiment of this application. The UPF network element may directly establish a connection to the first network element based on the address of the first network element. The connection between the UPF network element and the first network element may be a connection based on a protocol such as GTP-U, an IP protocol, or SRv6. A manner of connection between the UPF network element and the first network element is not limited in this embodiment of this application.

It may be understood that the dynamic destination address of the first service is sent in S610.

Optionally, the SMF network element may receive the correspondence between the static destination address of the first service and the dynamic destination address of the first service from the first network element. Alternatively, the SMF network element may obtain the correspondence between the static destination address of the first service and the dynamic destination address of the first service from a local configuration. Alternatively, the SMF network element may obtain the correspondence between the static destination address of the first service and the dynamic destination address of the first service when obtaining the session related policy corresponding to the first service from the PCF network element.

After obtaining the correspondence between the static destination address of the first service and the dynamic destination address of the first service, the SMF network element sends, to the UPF network element, the correspondence that is between the static destination address of the first service and the dynamic destination address of the first service and that is from the first network element. In other words, in another optional implementation of S610, that the SMF sends the destination address of the first service to the UPF specifically includes: sending the correspondence between the dynamic destination address and the static destination address of the first service.

S611: The SMF network element sends the destination address (the dynamic destination address) of the first service to the terminal device. Correspondingly, the terminal device receives the destination address of the first service from the SMF network element.

Optionally, the destination address of the first service may be carried in a session establishment or change request feedback message. In other words, the SMF network element receives the session establishment or change request message from the terminal device, and may send the session establishment or change request feedback message to the terminal device. The feedback message may include the destination address of the first service. Optionally, the feedback message may further include address information of the terminal device. For example, the address information of the terminal device may be allocated by a network side (the access network device or the core network device).

Optionally, in step S602, the first service information may further include the static destination address of the first service. For example, the first service information includes a correspondence between the identifier of the first service and the static destination address of the first service.

The terminal device may obtain the static destination address of the first service from the first service information, may obtain the static destination address of the first service from configuration information of the terminal device (internally pre-configured by the terminal device, for example, pre-configuration information in a SIM card), or may receive the dynamic destination address of the first service sent by the SMF network element. When receiving a plurality of destination addresses of the first service, the terminal device may select, based on an agreed priority, a destination address that is of the first service and that is to be used when subsequently transmitting data of the first service. For example, assuming that a priority of the destination address of the first service obtained from the SMF network element is higher than that of the destination address of the first service obtained from the first service information and is higher than that of the destination address of the first service obtained from the configuration information of the terminal device, the terminal device may use, in subsequent data transmission of the first service, the destination address of the first service obtained from the SMF network element. In other words, a priority of the dynamic destination address is higher than that of the static destination address.

It may be understood that, after receiving the dynamic destination address of the first service from the first network element, the SMF network element may send the dynamic destination address of the first service to the terminal device, that is, perform step S611. Optionally, after sending the correspondence between the static destination address of the first service and the dynamic destination address of the first service to the UPF network element, the SMF network element may not send the dynamic destination address of the first service to the terminal device, that is, not perform step S611. The terminal device may send the data of the first service based on the obtained static destination address (for example, pre-configured by the terminal or obtained from the PCF network element or the first network element) of the first service. For example, the terminal device transparently transmits the data of the first service to the UPF network element via the access network device. After receiving the data of the first service from the terminal device, the UPF may determine the dynamic destination address of the first service based on the correspondence between the static destination address of the first service and the dynamic destination address of the first service, and send, to the dynamic destination address of the first service, the data of the first service that is from the terminal device. In this way, when the dynamic destination address of the first service changes, the terminal device does not need to obtain the dynamic destination address of the first service each time. In other words, when the dynamic destination address of the first service changes, the terminal device may not perceive the change, thereby reducing signaling overheads.

S612: The terminal device sends the data of the first service based on the destination address of the first service.

In a possible implementation, after receiving the destination address of the first service from the SMF network element, the terminal device may send the data of the first service based on the destination address of the first service, to implement the first service. Specifically, the terminal device may send, via the access network device and the UPF network element, the data of the first service to the network element corresponding to the destination address of the first service.

Because of mobility of the terminal device, the address information of the terminal device may change. For example, because the address information of the terminal device is bound to an anchor UPF, when the anchor UPF changes, the address information of the terminal device is updated. To continuously provide the first service for the terminal device, this embodiment provides the following several implementations:
In a first possible implementation, the first network element/the network element corresponding to the destination address of the first service may allocate a temporary identifier to the terminal device, and send the temporary identifier to the SMF network element. Then, the SMF network element sends the temporary identifier to the terminal device. For example, in step S611, the SMF network element may include the temporary identifier in the session establishment or change request feedback message and send the session establishment or change request feedback message to the terminal device. Then, the terminal device may include the temporary identifier when sending the data of the first service to the network element corresponding to the destination address of the first service. Therefore, when the address information of the terminal device changes, the network element corresponding to the destination address of the first service may continue to provide a continuous service for the terminal device based on the temporary identifier. It should be noted that the temporary identifier may be understood as an identifier at a session granularity. When a session is terminated or is re-established, a temporary identifier may be reallocated based on the session.
In a second possible implementation, terminal device identifiers corresponding to different services are allocated to the terminal device by the PCF network element, the first network element, or the like, or through pre-configuration. The terminal device identifier herein may be understood as an identifier at a service granularity. For example, different identifiers may be allocated to the terminal based on a computing service, a data service, a perception service, and the like. Allocating the identifier based on the service granularity may be understood as a static allocation manner, and a continued period is longer as a service type changes.
In a third possible implementation, the first network element and/or the network element corresponding to the destination address of the first service maintain/maintains an update/change of the address of the terminal device. For example, when configuring a task rule for the network element corresponding to the destination address of the first service, the first network element may use the address information of the terminal device as a part of the rule. When the address information of the terminal device changes, the SMF network element may notify the first network element and send latest address information of the terminal device to the first network element. The address information of the terminal device in the task rule is updated, so that regardless of how the address information of the terminal device changes, the network element corresponding to the destination address of the first service can always obtain current address information of the terminal device, and provide a continuous service for the terminal device.
In a fourth possible implementation, in step S610, in addition to configuring the destination address of the first service for the UPF network element, the SMF network element may further configure a fixed address of the terminal device for the UPF network element. The fixed address herein may be understood as that when an actual address of the terminal device changes, the actual address may be mapped to the fixed address. For example, when the terminal device requests the first service, the SMF network element allocates a fixed address to the terminal device, and the fixed address does not change frequently in a service period. The SMF network element configures, for the UPF network element, the fixed address allocated to the terminal device, and the UPF network element stores a mapping relationship between the terminal device and the fixed address. After the address of the terminal device changes, the UPF network element changes a changed address of the terminal device to the fixed address based on the mapping relationship, to communicate with the network element corresponding to the destination address of the first service. For example, the SMF network element allocates a fixed address IP@1 to a terminal device A, and configures the fixed address IP@1 for the UPF network element. The UPF stores a mapping relationship between the terminal device A and the fixed address IP@1. When an address of the terminal device A changes from IP@1 to IP@2, when receiving a data packet sent by the terminal device A to the network element corresponding to the destination address of the first service, the UPF network element may replace IP@2 with IP@1 based on the mapping relationship between the terminal device A and the fixed address IP@1, and forward the data packet to the network element corresponding to the destination address of the first service. Similarly, when the network element at the destination address of the first service sends the data packet to the terminal device A by using IP@1 as a destination address of the data packet, the UPF network element may replace the destination address IP@1 of the data packet with IP@2, and the UPF network element sends the data packet to the terminal device A based on the destination address IP@2. Therefore, regardless of how the address of the terminal device changes, the UPF network element processes the changed address based on the mapping relationship between the fixed address and the terminal device, so that the network element at the destination address of the first service communicates with a same terminal device. Therefore, when the address information of the terminal device changes, it can be ensured that the network element at the destination address of the first service continuously provides the first service for the terminal device.

Optionally, the foregoing embodiment may further include step S613: The UPF network element updates the address of the UPF or the destination address of the first service with the first network element.

Specifically, the UPF network element may request (subscribe to) the destination address of the first service from the first network element directly or via the SMF network element.

When the address of the UPF network element changes, the UPF network element may send an updated address of the UPF network element to the first network element, to perform routing update on an Nu interface.

When the destination address of the first service changes, the first network element sends an updated destination address of the first service to the UPF network element, or the first network element sends an updated destination address of the first service to the SMF network element, and then the SMF network element sends the updated destination address of the first service to the UPF.

Further, the method may further include step S614: The UPF network element sends the updated destination address (an updated dynamic destination address) of the first service to the terminal device. Correspondingly, the terminal device receives the updated destination address of the first service from the UPF network element.

When the destination address of the first service changes, the UPF network element may send the updated destination address of the first service to the terminal device. Specifically, the UPF network element may directly send the updated destination address of the first service to the terminal device by using a user plane downlink data packet, or send the updated destination address of the first service to the SMF network element, and then the SMF network element further sends the updated destination address of the first service to the terminal device.

In this embodiment, the terminal device may request the first service from a core network. Specifically, the terminal device may send the session establishment or change request message to the SMF network element in the core network, and the SMF network element establishes the user plane connection that is between the terminal device, the access network device, and the UPF network element and that is used for the first service. Then, the SMF network element requests the first network element to establish the connection between the UPF network element and the network element corresponding to the destination address of the first service, so that a communication requirement for a new service (for example, the first service) can be implemented. The following can be implemented in this embodiment: The network element corresponding to the destination address of the first service (the network element that provides the first service for the terminal device) is newly added to a user plane system architecture, to complete the user plane connection between the terminal device, the access network device, the user plane network element, and the network element corresponding to the destination address of the first service. The first network element is added to a control plane, so that the first network element controls the network element corresponding to the destination address of the first service, and there is no need to add management functions of different services to an SMF network element. Therefore, scalability and flexibility of a mobile network can be improved.

The following describes still another communication method provided in an embodiment of this application. Refer to FIG. 7. FIG. 7 is an interaction diagram of still another communication method according to an embodiment of this application. As shown in FIG. 7, the communication method may include at least the following steps. Steps S711, S713, and S714 are optional steps.

S701 and S702 correspond to S601 and S602. For related descriptions of S701 and S702, refer to the descriptions of S601 and S602. Details are not described herein again.

S703: The terminal device sends third request information to a first network element. Correspondingly, the first network element receives the third request information from the terminal device.

In a possible implementation, the terminal device may send the third request information to the first network element based on an established session. In other words, the terminal device has established a first session before sending the third request information to the first network element. For example, the established first session may be a first PDU session, and the first PDU session may be for establishing a user plane connection between the terminal device, an access network device, and a UPF network element. The terminal device sends the third request information to the first network element. The third request information may include the identifier of the first service and information about a session established by the terminal device. The information about the session may include at least one of an identifier of the session, an identifier of the terminal device (for example, a permanent or temporary ID of the terminal device), or an address of the terminal device (for example, an IP address or a MAC address of the terminal device). In addition, the third request information may further include information about an SMF network element that provides a session service for the terminal, for example, identification information of the SMF network element and address information of the SMF network element.

In another possible implementation, the terminal device may send the third request information to the first network element, where the third request information includes the identifier of the first service and a session establishment or change request message. For example, if the terminal device does not establish a session before sending the third request information to the first network element, the terminal device may include a session establishment request message in the third request information, to establish a session; or if the terminal device has established a session before sending the third request information to the first network element, the terminal device may include a session change request message in the third request information, to change a previously established session. The session establishment or change request message may be a separate message, or may be a container (the container includes the session establishment or change message or content carried in the message). The first network element may directly forward the session establishment or change request message in the third request information to the SMF network element (for example, S705). In other words, the session establishment or change request message may be ciphertext for the first network element, and the first network element does not read content actually included in the session establishment or change request message.

S704: The first network element obtains, from the PCF network element, an execution policy corresponding to the first service.

For related descriptions of the execution policy corresponding to the first service, refer to the descriptions of step S607. Details are not described herein again.

After receiving the third request information from the terminal device, the first network element may send, to the PCF network element, request information for requesting the execution policy corresponding to the first service. The request information may include the identifier of the first service and/or the session parameter. The PCF network element may send, based on the identifier of the first service and/or the session parameter in the request information, the execution policy corresponding to the first service to the first network element. For example, when the request information includes the identifier of the first service, the PCF network element may determine, based on the identifier of the first service, the execution policy corresponding to the first service. Alternatively, when the request information includes the session parameter, the PCF network element may determine the identifier of the first service based on the correspondence between the session parameter and the identifier of the first service, and then determine, based on the identifier of the first service, the execution policy corresponding to the first service. Alternatively, when the request information includes the identifier of the first service and the session parameter, the PCF network element may determine, based on the identifier of the first service, the execution policy corresponding to the first service. Optionally, the correspondence between the identifier of the first service and the session parameter may be pre-configured locally in the PCF network element. For example, a correspondence table is pre-configured. When receiving the identifier of the first service or the session parameter, the PCF network element may query the correspondence table, to learn of the session parameter corresponding to the identifier of the first service, or learn of the identifier of the first service corresponding to the session parameter. It may be understood that the correspondence may be pre-configured in a form of a table, or may be pre-configured in another form. This is not limited in this application.

The PCF network element may send, based on the request information sent by the first network element, the execution policy corresponding to the first service to the first network element. Specifically, the PCF network element may configure based on a local policy, or obtain from the UDR, the execution policy corresponding to the first service, and feed back the execution policy to the first network element.

In addition, the first network element may also obtain, from a subscription management network element or a data repository network element (for example, a UDM or a UDR), subscription data related to the first service of the terminal device, for example, including whether the terminal device is allowed to use the first service, and a first service level (for example, a computing power capability of a computing service and a storage capacity of a data service) that can be used by the terminal device.

S705: The first network element sends a session establishment or change request message to the SMF network element. Correspondingly, the SMF network element receives the session establishment or change request message from the first network element.

In a possible implementation, after the first network element receives the third request information from the terminal device, the first network element sends a session change request message to the SMF network element. For example, before receiving the third request information of the terminal device, the first network element has established a session. On this basis, the established session needs to be changed. For example, the user plane connection between the terminal device, the access network device, and the UPF network element may be retained, and a connection between the UPF network element and a network element corresponding to the destination address of the first service is added on this basis. The session change request message may include one or more of the identifier of the first service, a parameter of the session established by the terminal device, and an identifier of the session established by the terminal device.

In another possible implementation, after the first network element receives the third request information from the terminal device, the first network element sends a session establishment request message to the SMF network element. For example, before receiving the third request information of the terminal device, the first network element does not establish a session, and may establish a session by sending a session establishment request message to the SMF network element, to implement a connection between the terminal device, the access network device, the UPF network element, and a network element corresponding to the destination address of the first service. The session establishment request message includes the identifier of the first service and/or the session parameter. The session parameter may include at least one of the following: a data network name (data network name, DNN) and/or slice (slice) information, a session type, a service continuity mode, an application identifier (APP ID), or an access type.

Before sending the session establishment or change request message to the SMF network element, the first network element may first determine an SMF network element that currently serves the terminal device. Specifically, the first network element may query, based on information about the session established by the terminal device in the third request information that is from the terminal device, a network element such as a UDM or an AMF for the SMF network element that currently serves the terminal device, or the first network element may determine, based on information about an SMF network element provided by the terminal device in the third request information, the SMF network element that currently serves the terminal device, and send the session establishment or change request message to the SMF network element.

S706: The SMF network element obtains, from the PCF network element, a session related policy corresponding to the first service.

For related descriptions of the session related policy corresponding to the first service, refer to the descriptions of step S604. Details are not described herein again.

The session related policy corresponding to the first service may further include a correspondence between the identifier of the first service and the parameter of the session established by the terminal device. Alternatively, the session related policy corresponding to the first service may further include the correspondence between the session parameter and the identifier of the first service, and the session parameter is for establishing a session corresponding to the first service.

### Corresponding to step S705:

In a possible implementation, the SMF network element may send, to the PCF network element, request information for requesting the session related policy corresponding to the first service. The request information may include the identifier of the first service and/or the parameter of the session established by the terminal device. The PCF network element may send, based on the identifier of the first service and/or the parameter of the session established by the terminal device in the request information, the session related policy corresponding to the first service to the SMF network element. For example, when the request information includes the identifier of the first service, the PCF network element may determine, based on the identifier of the first service, the session related policy corresponding to the first service, and send, to the SMF network element, the session related policy that corresponds to the first service and that includes the correspondence between the identifier of the first service and the parameter of the session established by the terminal device. Alternatively, when the request information includes the parameter of the session established by the terminal device, the PCF network element may determine the identifier of the first service based on the correspondence between the parameter of the session established by the terminal device and the identifier of the first service, determine, based on the identifier of the first service, the session related policy corresponding to the first service, and send, to the SMF network element, the session related policy that corresponds to the first service and that includes the correspondence between the identifier of the first service and the parameter of the session established by the terminal device. Alternatively, when the request information includes the identifier of the first service and the parameter of the session established by the terminal device, the PCF network element may determine, based on the identifier of the first service, the session related policy corresponding to the first service, and send, to the SMF network element, the session related policy that corresponds to the first service and that includes the correspondence between the identifier of the first service and the parameter of the session established by the terminal device.

In another possible implementation, the SMF network element may send, to the PCF network element, request information for requesting the session related policy corresponding to the first service. The request information may include the identifier of the first service and/or the session parameter. The PCF network element may send, based on the identifier of the first service and/or the session parameter in the request information, the session related policy corresponding to the first service to the SMF network element. For example, when the request information includes the identifier of the first service, the PCF network element may determine, based on the identifier of the first service, the session related policy corresponding to the first service, and send, to the SMF network element, the session related policy that corresponds to the first service and that includes the correspondence between the identifier of the first service and the session parameter. Alternatively, when the request information includes the session parameter, the PCF network element may determine the identifier of the first service based on the correspondence between the session parameter and the identifier of the first service, determine, based on the identifier of the first service, the session related policy corresponding to the first service, and send, to the SMF network element, the session related policy that corresponds to the first service and that includes the correspondence between the identifier of the first service and the session parameter. Alternatively, when the request information includes the identifier of the first service and the session parameter, the PCF network element may determine, based on the identifier of the first service, the session related policy corresponding to the first service, and send, to the SMF network element, the session related policy that corresponds to the first service and that includes the correspondence between the identifier of the first service and the session parameter. Optionally, the correspondence between the identifier of the first service and the session parameter may be pre-configured locally in the PCF network element. For example, a correspondence table is pre-configured. When receiving the identifier of the first service or the session parameter, the PCF network element may query the correspondence table, to learn of the session parameter corresponding to the identifier of the first service, or learn of the identifier of the first service corresponding to the session parameter. It may be understood that the correspondence may be pre-configured in a form of a table, or may be pre-configured in another form. This is not limited in this application.

The PCF network element may send, based on the request information sent by the SMF network element, the session related policy corresponding to the first service to the first network element. Specifically, the PCF network element may configure based on a local policy, or obtain from a UDR, the session related policy corresponding to the first service, and feed back the session related policy to the SMF network element.

After receiving the session related policy corresponding to the first service from the PCF network element, the SMF network element may establish, based on the identifier of the first service and/or the parameter of the session established by the terminal device, and the correspondence between the parameter of the session established by the terminal device and the identifier of the first service in the policy, the session corresponding to the first service. Alternatively, after receiving the session related policy corresponding to the first service from the PCF network element, the SMF network element may establish, based on the identifier of the first service and/or the session parameter and the correspondence between the session parameter and the identifier of the first service in the policy, the session corresponding to the first service. For example, the session corresponding to the first service may be a PDU session corresponding to the first service. It may be understood that the PDU session is used for the first service or is for carrying the first service.

S707: The SMF network element sends information about the terminal device and an address of the UPF network element to the first network element. Correspondingly, the first network element receives the information about the terminal device and the address of the UPF network element from the SMF network element.

After establishing the session corresponding to the first service, the SMF network element may determine the information about the terminal device and the address of the UPF network element, and send the information about the terminal device and the address of the UPF network element to the first network element. The terminal device and the UPF network element are configured to carry the session corresponding to the first service. The information about the terminal device includes at least one of an identifier (for example, a permanent or temporary ID of the terminal device) of the terminal device or an address (for example, an IP address or a MAC address) of the terminal device.

The SMF network element may send the information about the terminal device and the address of the UPF network element separately to the first network element by using two messages, or the SMF network element may send the information about the terminal device and the address of the UPF network element to the first network element by using one message. A sending manner in which the SMF sends the information about the terminal device and the address of the UPF network element to the first network element is not limited in this embodiment.

S708: The first network element determines the destination address of the first service, and sends configuration information.

It may be understood that S708 corresponds to S608. For related descriptions of S708, refer to the descriptions of S608. Details are not described herein again.

S709: The first network element sends the destination address of the first service to the SMF network element. Correspondingly, the SMF network element receives the destination address of the first service from the first network element.

It may be understood that S709 corresponds to S609. For related descriptions of S709, refer to the descriptions of S609. Details are not described herein again.

S710: The SMF network element sends the destination address of the first service to the UPF network element. Correspondingly, the UPF network element receives the destination address of the first service from the SMF network element.

It may be understood that S710 corresponds to S610. For related descriptions of S710, refer to the descriptions of S610. Details are not described herein again.

S711: The first network element sends a destination address (a dynamic destination address) of the first service to the terminal device. Correspondingly, the terminal device receives the destination address of the first service from the first network element.

The first network element receives the third request information from the terminal device, and may send a feedback message of the third request information to the terminal device. The feedback message may include the destination address of the first service. Optionally, the feedback message may further include terminal device address information allocated by a network side to the terminal device.

Optionally, in step S702, the first service information may further include the static destination address of the first service. For example, the first service information includes a correspondence between the identifier of the first service and the destination address of the first service.

The terminal device may obtain the static destination address of the first service from the first service information, may obtain the static destination address of the first service from configuration information of the terminal device (internally pre-configured by the terminal device, for example, pre-configuration information in a SIM card), or may receive the dynamic destination address of the first service from the first network element. When receiving a plurality of destination addresses of the first service, the terminal device may select, based on an agreed priority, a destination address that is of the first service and that is to be used when subsequently transmitting data of the first service. For example, assuming that a priority of the destination address of the first service obtained from the first network element is higher than that of the destination address of the first service obtained from the first service information and is higher than that of the destination address of the first service obtained from the configuration information of the terminal device, the terminal device may use, in subsequent data transmission of the first service, the destination address of the first service obtained from the first network element. In other words, a priority of the dynamic destination address is higher than that of the static destination address.

It may be understood that after determining the dynamic destination address of the first service in step S708, the first network element may send the dynamic destination address of the first service to the terminal device, that is, perform step S711. Optionally, after the SMF network element sends the correspondence between the static destination address of the first service and the dynamic destination address of the first service to the UPF network element, the first network element may not send the dynamic destination address of the first service to the terminal device, that is, not perform step S711. The terminal device may send the data of the first service based on the obtained static destination address (for example, pre-configured by the terminal or obtained from the PCF network element or the first network element) of the first service. For example, the terminal device transparently transmits the data of the first service to the UPF network element via the access network device. After receiving the data of the first service from the terminal device, the UPF may determine the dynamic destination address of the first service based on the correspondence between the static destination address of the first service and the dynamic destination address of the first service, and send, to the dynamic destination address of the first service, the data of the first service that is from the terminal device. In this way, when the dynamic destination address of the first service changes, the terminal device does not need to obtain the dynamic destination address of the first service each time. In other words, when the dynamic destination address of the first service changes, the terminal device may not perceive the change, thereby reducing signaling overheads.

S712: The terminal device sends the data of the first service based on the destination address of the first service.

It may be understood that S712 corresponds to S612. For related descriptions of S712, refer to the descriptions of S612. Details are not described herein again.

Optionally, the foregoing embodiment may further include step S713: The UPF network element updates the address of the UPF or the destination address of the first service with the first network element.

Further, the method further includes step S714: The UPF network element sends an updated destination address (an updated dynamic destination address) of the first service to the terminal device. Correspondingly, the terminal device receives the updated destination address of the first service from the UPF network element.

For related descriptions of step S713 and step S714, refer to the descriptions of step S613 and step S614. Details are not described herein again.

In this embodiment, the terminal device may request the first service from a core network. Specifically, the terminal device may send the request information to the first network element in the core network, and the first network element requests the SMF network element to establish the user plane connection that is between the terminal device, the access network device, and the UPF network element and that is used for the first service. Then, the first network element establishes the connection between the UPF network element and the network element corresponding to the destination address of the first service, to implement a communication requirement for a new service (for example, the first service). The following can be implemented in this embodiment: The network element corresponding to the destination address of the first service (the network element that provides the first service for the terminal device) is newly added to a user plane system architecture, to complete the user plane connection between the terminal device, the access network device, the UPF network element, and the network element corresponding to the destination address of the first service. The first network element is added to a control plane, so that the first network element controls the network element corresponding to the destination address of the first service, and there is no need to add management functions of different services to an SMF network element. Therefore, scalability and flexibility of a mobile network can be improved.

The following describes still another communication method provided in an embodiment of this application. Refer to FIG. 8. FIG. 8 is an interaction diagram of still another communication method according to an embodiment of this application. As shown in FIG. 8, the communication method may include at least the following steps. Steps S807, S812, and S814 to S816 are optional steps.

S801 and S802 correspond to S601 and S602. For related descriptions of S801 and S802, refer to the descriptions of S601 and S602. Details are not described herein again.

S803: The terminal device sends fourth request information to a second network element. Correspondingly, the second network element receives the fourth request information from the terminal device.

In a possible implementation, the terminal device may send the fourth request information to the second network element based on an established session. In other words, the terminal device has established a first session before sending the fourth request information to the second network element. For example, the established first session may be a first PDU session, and the first PDU session may be for establishing a user plane connection between the terminal device, an access network device, and a UPF network element. The terminal device sends the fourth request information to the second network element. The fourth request information may include the identifier of the first service and information about a session established by the terminal device. The information about the session may include at least one of an identifier of the session, an identifier of the terminal device (for example, a permanent or temporary ID of the terminal device), or an address of the terminal device (for example, an IP address or a MAC address of the terminal device). In addition, the fourth request information may further include information about an SMF network element that provides a session service for the terminal, for example, identification information of the SMF network element and address information of the SMF network element.

In another possible implementation, the terminal device sends the fourth request information to the second network element, where the fourth request information includes the identifier of the first service and a session establishment or change request message. For example, if the terminal device does not establish a session before sending the fourth request information to the second network element, the terminal device may include a session establishment request message in the fourth request information, to establish a session; or if the terminal device has established a session before sending the fourth request information to the second network element, the terminal device may include session change request information in the fourth request information, to change a previously established session. The session establishment or change request message may be a separate message, or may be a container (the container includes the session establishment or change message or content carried in the message). The second network element may directly forward the session establishment or change request message in the fourth request information to the SMF network element (for example, S808). In other words, the session establishment or change request message may be ciphertext for the second network element, and the second network element does not read content actually included in the session establishment or change request message.

The second network element may be understood as a service processing node of a user in a core network, and invokes a network service of the core network for the terminal device. For example, the second network element may be an AMF network element in a 5G network.

S804: The second network element obtains, from the PCF network element, a policy corresponding to the first service.

The policy corresponding to the first service may be understood as including a session related policy corresponding to the first service and an execution policy corresponding to the first service. Specifically, for the session related policy corresponding to the first service, refer to the descriptions of step S604, and for the execution policy corresponding to the first service, refer to the descriptions of step S607. Details are not described herein.

The session related policy corresponding to the first service may further include a correspondence between the identifier of the first service and a parameter of the session established by the terminal device. Alternatively, the session related policy corresponding to the first service may further include the correspondence between the session parameter and the identifier of the first service, and the session parameter is for establishing the session corresponding to the first service.

Specifically, after receiving the fourth request information from the terminal device, the second network element may send request information for requesting the policy corresponding to the first service to the PCF network element.

### Corresponding to step S803:

In a possible implementation, the request information may include the identifier of the first service and/or the parameter of the session established by the terminal device. The PCF network element may send, based on the identifier of the first service and/or the parameter of the session established by the terminal device in the request information, the policy corresponding to the first service to the second network element. For example, when the request information includes the identifier of the first service, the PCF network element may determine, based on the identifier of the first service, the session related policy corresponding to the first service and the execution policy corresponding to the first service, and send, to the second network element, the session related policy that corresponds to the first service and that includes the correspondence between the identifier of the first service and the parameter of the session established by the terminal device. Alternatively, when the request information includes the parameter of the session established by the terminal device, the PCF network element may determine the identifier of the first service based on the correspondence between the parameter of the session established by the terminal device and the identifier of the first service, determine, based on the identifier of the first service, the session related policy corresponding to the first service and the execution policy corresponding to the first service, and send, to the second network element, the session related policy that corresponds to the first service and that includes the correspondence between the identifier of the first service and the parameter of the session established by the terminal device. Alternatively, when the request information includes the identifier of the first service and the parameter of the session established by the terminal device, the PCF network element may determine, based on the identifier of the first service, the session related policy corresponding to the first service and the execution policy corresponding to the first service, and send, to the second network element, the session related policy that corresponds to the first service and that includes the correspondence between the identifier of the first service and the parameter of the session established by the terminal device.

In another possible implementation, the request information may include the identifier of the first service and/or the session parameter. The PCF network element may send, based on the identifier of the first service and/or the session parameter in the request information, the policy corresponding to the first service to the second network element. For example, when the request information includes the identifier of the first service, the PCF network element may determine, based on the identifier of the first service, the session related policy corresponding to the first service and the execution policy corresponding to the first service, and send, to the second network element, the session related policy that corresponds to the first service and that includes the correspondence between the identifier of the first service and the session parameter. Alternatively, when the request information includes the session parameter, the PCF network element may determine the identifier of the first service based on the correspondence between the session parameter and the identifier of the first service, determine, based on the identifier of the first service, the session related policy corresponding to the first service and the execution policy corresponding to the first service, and send, to the second network element, the session related policy that corresponds to the first service and that includes the correspondence between the identifier of the first service and the session parameter. Alternatively, when the request information includes the identifier of the first service and the session parameter, the PCF network element may determine, based on the identifier of the first service, the session related policy corresponding to the first service and the execution policy corresponding to the first service, and send, to the second network element, the session related policy that corresponds to the first service and that includes the correspondence between the identifier of the first service and the session parameter. Optionally, the correspondence between the identifier of the first service and the session parameter may be pre-configured locally in the PCF network element. For example, a correspondence table is pre-configured. When receiving the identifier of the first service or the session parameter, the PCF network element may query the correspondence table, to learn of the session parameter corresponding to the identifier of the first service, or learn of the identifier of the first service corresponding to the session parameter. It may be understood that the correspondence may be pre-configured in a form of a table, or may be pre-configured in another form. This is not limited in this application.

The PCF network element may send, based on the request information sent by the second network element, the policy corresponding to the first service to the second network element. Specifically, the PCF network element may configure based on a local policy, or obtain from the UDR, the policy corresponding to the first service, and feed back the policy to the second network element.

In addition, the second network element may also obtain, from a subscription management network element or a data repository network element (for example, a UDM or the UDR), subscription data related to the first service of a user, for example, including whether the user is allowed to use the first service, and a first service level (for example, a computing power capability of a computing service and a storage capacity of a data service) that can be used by the user. The second network element may determine, from subscription information, the policy corresponding to the first service.

S805: The second network element sends fifth request information to a first network element. Correspondingly, the first network element receives the fifth request information from the second network element.

After the second network element receives the fourth request information from the terminal device, the second network element sends the fifth request information to the first network element, where the fifth request information is for requesting the first service, and the fifth request information may include the identifier of the first service and the execution policy corresponding to the first service.

It may be understood that after obtaining the execution policy corresponding to the first service from the PCF network element, the second network element may forward, to the first network element by using the fifth request information, the execution policy corresponding to the first service. Before forwarding the execution policy corresponding to the first service to the first network element, the second network element may process the execution policy corresponding to the first service, for example, encrypt or replace privacy information of the terminal device in the execution policy (for example, encrypt or replace a permanent identifier of the terminal device with a temporary identifier), to avoid transmission of the privacy information of the terminal device in a network, thereby improving network security.

S806: The first network element determines the destination address of the first service, and sends configuration information.

The first network element receives the fifth request information from the second network element, may determine the destination address of the first service based on the execution policy corresponding to the first service in the fifth request information, and sends the configuration information to the destination address of the first service. The configuration information may include an execution rule of the first service. The execution rule of the first service may be generated by the first network element based on the execution policy that corresponds to the first service and that is obtained in step S804.

Specifically, for the execution rule of the first service, refer to the descriptions of step S608. Details are not described herein again.

S807: The first network element sends the destination address of the first service to the second network element. Correspondingly, the second network element receives the destination address of the first service from the first network element.

After determining the destination address of the first service, the first network element may send the destination address of the first service to the second network element. For example, the destination address of the first service may be at least one of identification information, address information, or domain information of a network element corresponding to the destination address of the first service. In this way, the second network element subsequently sends the destination address of the first service to the terminal device, to establish data communication of the first service between the terminal device and the network element corresponding to the destination address of the first service.

Optionally, the first network element may configure a static destination address of the first service for the terminal device, and send a correspondence between the static destination address of the first service and a dynamic destination address of the first service to the second network element. Alternatively, when obtaining the execution policy corresponding to the first service from the PCF network element, the first network element may further obtain a correspondence between a static destination address of the first service and a dynamic destination address of the first service, and send the correspondence between the static destination address of the first service and the dynamic destination address of the first service to the second network element.

S808: The second network element sends a session establishment or change request message to the SMF network element. Correspondingly, the SMF network element receives the session establishment or change request message from the second network element.

After receiving the fourth request information from the terminal device, the second network element may separately request the SMF network element to establish or change the user plane connection that is between the terminal device, the access network device, and the UPF network element and that is used for the first service, and request the first network element to establish a connection between the UPF network element and the network element corresponding to the destination address of the first service, so that the terminal device, the access network device, the UPF network element, and the network element corresponding to the destination address of the first service can be connected. For a specific implementation of requesting, by the second network element, the first network element to establish the connection between the UPF network element and the network element corresponding to the destination address of the first service, refer to step S805. A specific implementation of requesting, by the second network element, the SMF network element to establish or change the user plane connection that is between the terminal device, the access network device, and the UPF network element and that is used for the first service may be as follows:

### Corresponding to step S803:

In a possible implementation, after the second network element receives the fourth request information from the terminal device, the second network element sends a session change request message to the SMF network element. For example, before receiving the fourth request information of the terminal device, the second network element has established a session. On this basis, the established session needs to be changed. For example, the user plane connection between the terminal device, the access network device, and the UPF network element may be retained, and a connection between the UPF network element and the network element corresponding to the destination address of the first service is added on this basis. The session change request message may include one or more of the identifier of the first service, a parameter of the session established by the terminal device, and an identifier of the session established by the terminal device.

In another possible implementation, after the second network element receives the fourth request information from the terminal device, the second network element sends a session establishment request message to the SMF network element. For example, before receiving the fourth request information of the terminal device, the second network element does not establish a session, and may establish a session by sending a session establishment request message to the SMF network element, to implement the connection between the terminal device, the access network device, the UPF network element, and the network element corresponding to the destination address of the first service. The session establishment request message includes the identifier of the first service and/or the session parameter. The session parameter may include at least one of the following: a DNN and/or slice (slice) information, a session type, a service continuity mode, an application identifier (APP ID), or an access type.

It may be understood that the session establishment or change request message sent by the second network element to the SMF network element may further include a session related policy corresponding to the first service.

Before sending the session establishment or change request message to the SMF network element, the second network element may first determine an SMF network element that currently serves the terminal device. Specifically, the second network element may query, based on information about the session established by the terminal device in the fourth request information from the terminal device, a network element such as a UDM or an AMF for the SMF network element that currently serves the terminal device, or the second network element may determine, based on information about an SMF network element provided by the terminal device in the fourth request information, the SMF network element that currently serves the terminal device, and send the session establishment or change request message to the SMF network element.

S809: The SMF network element sends information about the terminal device and an address of the UPF network element to the second network element. Correspondingly, the second network element receives the information about the terminal device and the address of the UPF network element from the SMF network element.

After establishing the session corresponding to the first service, the SMF network element may determine the information about the terminal device and the address of the UPF network element, and send the information about the terminal device and the address of the UPF network element to the second network element. The terminal device and the UPF network element are configured to carry the session corresponding to the first service. The information about the terminal device includes at least one of an identifier (for example, a permanent or temporary ID of the terminal device) of the terminal device or an address (for example, an IP address or a MAC address) of the terminal device.

The SMF network element may send the information about the terminal device and the address of the UPF network element separately to the first network element by using two messages, or the SMF network element may send the information about the terminal device and the address of the UPF network element to the first network element by using one message. A sending manner in which the SMF sends the information about the terminal device and the address of the UPF network element to the first network element is not limited in this embodiment.

S810: The second network element sends the information about the terminal device and the address of the UPF network element to the first network element. Correspondingly, the first network element receives the information about the terminal device and the address of the UPF network element from the second network element.

The second network element sends the information about the terminal device and the address of the UPF network element to the first network element, so that the first network element can send the information about the terminal device and the address of the UPF network element to the network element corresponding to the destination address of the first service.

Optionally, after determining the destination address of the first service in step S806, the first network element may not send the configuration information to the network element corresponding to the destination address of the first service, and may send the configuration information to the network element corresponding to the destination address of the first service in this step. In this case, the configuration information may include the execution rule of the first service, the information about the terminal device, and the address of the UPF network element. The first network element sends the information about the terminal device and the address of the UPF network element to the network element corresponding to the destination address of the first service, so that the network element corresponding to the destination address of the first service can determine the terminal device and the UPF network element that execute the first service, to implement subsequent data communication of the first service between the terminal device and the network element corresponding to the destination address of the first service.

S811: The second network element sends the destination address of the first service to the UPF network element. Correspondingly, the UPF network element receives the destination address of the first service from the second network element.

After obtaining the destination address of the first service from the first network element in step S807, the second network element may send the destination address of the first service to the UPF network element, so that the UPF network element can establish the connection to the network element corresponding to the destination address of the first service. Optionally, in addition to the destination address of the first service, the SMF network element may further send an address of the first network element to the UPF network element. Correspondingly, the UPF network element receives the destination address of the first service and the address of the first network element. The UPF network element may establish, based on the destination address of the first service, the connection to the network element corresponding to the destination address of the first service.

The connection between the UPF network element and the network element corresponding to the destination address of the first service may be a connection based on a protocol such as GPRS GTP-U, an IP protocol, or SRv6. A manner of connection between the UPF network element and the network element corresponding to the destination address of the first service is not limited in this embodiment of this application. The UPF network element may directly establish a connection to the first network element based on the address of the first network element. The connection between the UPF network element and the first network element may be a connection based on a protocol such as GTP-U, an IP protocol, or SRv6. A manner of connection between the UPF network element and the first network element is not limited in this embodiment of this application.

Optionally, the second network element may receive the correspondence between the static destination address of the first service and the dynamic destination address of the first service from the first network element. Alternatively, the second network element may obtain the correspondence between the static destination address of the first service and the dynamic destination address of the first service from a local configuration. Alternatively, the second network element may obtain the correspondence between the static destination address of the first service and the dynamic destination address of the first service when obtaining the policy corresponding to the first service from the PCF network element.

After obtaining the correspondence between the static destination address of the first service and the dynamic destination address of the first service, the second network element sends, to the UPF network element, the correspondence that is between the static destination address of the first service and the dynamic destination address of the first service and that is from the first network element.

S812: The second network element sends the destination address (the dynamic destination address) of the first service to the terminal device. Correspondingly, the terminal device receives the destination address of the first service from the second network element.

After receiving the fourth request information from the terminal device, the second network element may send, to the terminal device, feedback information corresponding to the fourth request information, where the feedback information may carry the destination address of the first service. Optionally, the feedback message may further include terminal device address information allocated by a network side to the terminal device.

Optionally, in step S802, the first service information may further include the static destination address of the first service. For example, the first service information includes a correspondence between the identifier of the first service and the static destination address of the first service.

The terminal device may obtain the static destination address of the first service from the first service information, may obtain the static destination address of the first service from configuration information of the terminal device (internally pre-configured by the terminal device, for example, pre-configuration information in a SIM card), or may receive the dynamic destination address of the first service from the second network element. When receiving a plurality of destination addresses of the first service, the terminal device may select, based on an agreed priority, a destination address that is of the first service and that is to be used when subsequently transmitting the data of the first service. For example, assuming that a priority of the destination address of the first service obtained from the second network element is higher than that of the destination address of the first service obtained from the first service information and is higher than that of the destination address of the first service obtained from the configuration information of the terminal device, the terminal device may use, in subsequent data transmission of the first service, the destination address of the first service obtained from the second network element. In other words, a priority of the dynamic destination address is higher than that of the static destination address.

It may be understood that after receiving the dynamic destination address of the first service from the first network element, the second network element may send the dynamic destination address of the first service to the terminal device, that is, perform step S812. Optionally, after sending the correspondence between the static destination address of the first service and the dynamic destination address of the first service to the UPF network element, the second network element may not send the dynamic destination address of the first service to the terminal device, that is, not perform step S812. The terminal device may send the data of the first service based on the obtained static destination address (for example, pre-configured by the terminal or obtained from the PCF network element or the first network element) of the first service. For example, the terminal device transparently transmits the data of the first service to the UPF network element via the access network device. After receiving the data of the first service from the terminal device, the UPF may determine the dynamic destination address of the first service based on the correspondence between the static destination address of the first service and the dynamic destination address of the first service, and send, to the dynamic destination address of the first service, the data of the first service that is from the terminal device. In this way, when the dynamic destination address of the first service changes, the terminal device does not need to obtain the dynamic destination address of the first service each time. In other words, when the dynamic destination address of the first service changes, the terminal device may not perceive the change, thereby reducing signaling overheads.

S813: The terminal device sends the data of the first service based on the destination address of the first service.

It may be understood that, for related descriptions of S813, refer to the descriptions of S612. Details are not described herein again.

Optionally, the foregoing embodiment may further include step S814: The UPF network element updates the address of the UPF or the destination address of the first service with the first network element. For related descriptions of step S814, refer to the descriptions of step S613. Details are not described herein again.

Further, the method further includes step S815: The UPF network element sends an updated destination address of the first service to the second network element. Correspondingly, the second network element receives the updated destination address of the first service from the UPF network element. When the destination address of the first service changes, the UPF network element may send the updated destination address of the first service to the second network element. Specifically, the UPF network element may directly send the updated destination address of the first service to the second network element by using a user plane downlink data packet, or send the updated destination address of the first service to the SMF network element, and then the SMF network element further sends the updated destination address of the first service to the second network element.

Further, the method further includes step S816: The second network element sends the updated destination address (an updated dynamic destination address) of the first service to the terminal device. Correspondingly, the terminal device receives the updated destination address of the first service from the second network element.

In this embodiment, the terminal device may interact with a core network via the second network element, to implement a communication requirement for a new service (for example, the first service). In this embodiment, the network element corresponding to the destination address of the first service (the network element that provides the first service for the terminal device) is newly added to a user plane system architecture, to complete the user plane connection between the terminal device, the access network device, the UPF network element, and the network element corresponding to the destination address of the first service. The first network element is added to a control plane, so that the first network element controls the network element corresponding to the destination address of the first service, and there is no need to add management functions of different services to an SMF network element. Therefore, scalability and flexibility of a mobile network can be improved.

The following describes apparatus embodiments in embodiments of this application.

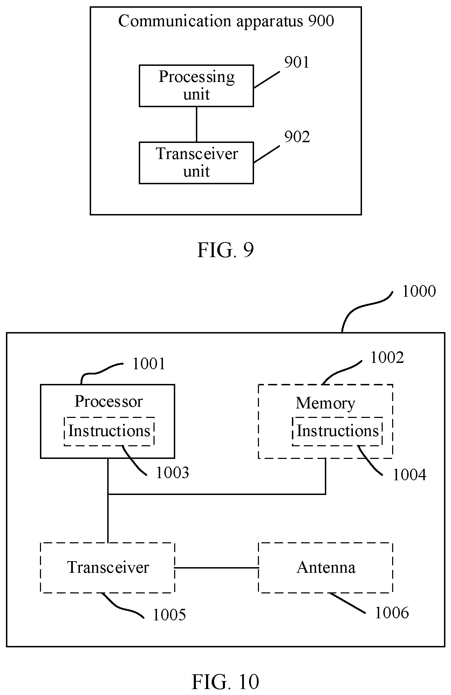

Refer to FIG. 9. FIG. 9 is a diagram of a structure of a communication apparatus according to an embodiment of this application. The apparatus may be a terminal device, or may be an apparatus (for example, a chip, a chip system, or a circuit) in the terminal device. As shown in FIG. 9, the communication apparatus 900 includes at least a processing unit 901 and a transceiver unit 902.

The processing unit 901 is configured to obtain first service information, where the first service information includes an identifier of a first service.

The transceiver unit 902 is configured to send a first service request to a core network element based on the first service information.

The processing unit 901 is further configured to determine a destination address of the first service.

The transceiver unit 902 is further configured to send data of the first service based on the destination address of the first service.

In an implementation, the first service information further includes a correspondence between the identifier of the first service and a session parameter, and the session parameter includes at least one of the following: a DNN and/or slice information, a session type, a service continuity mode, an application identifier, or an access type.

In an implementation, when sending the first service request to the core network element based on the first service information, the transceiver unit 902 is specifically configured to:
send a session establishment or change request message to the core network element, where the session establishment or change request message includes the identifier of the first service and/or the session parameter, or the session establishment or change request message includes first request information, and the first request information includes the identifier of the first service.

In an implementation, when sending the first service request to the core network element based on the first service information, the transceiver unit 902 is specifically configured to:
send third request information or fourth request information to the core network element, where the third request information or the fourth request information includes the identifier of the first service and information about an established session, and the information about the established session includes at least one of an identifier of the session, an identifier of the terminal device, or an address of the terminal device.

In an implementation, when sending the first service request to the core network element based on the first service information, the transceiver unit 902 is specifically configured to:
send third request information or fourth request information to the core network element, where the third request information or the fourth request information includes the identifier of the first service and a session establishment or change request message, and the session establishment or change request message includes the identifier of the first service and/or the session parameter.

In an implementation, when sending the session establishment or change request message to the core network element, the transceiver unit 902 is specifically configured to:
send the session establishment or change request message to a session management network element in the core network element.

In an implementation, when sending the third request information or the fourth request information to the core network element, the transceiver unit 902 is specifically configured to:
send the third request information to a first network element in the core network element, or send the fourth request information to a second network element in the core network element, where the first network element and the second network element are different network elements.

In an implementation, when determining the destination address of the first service, the processing unit 901 is specifically configured to:
obtain the destination address of the first service from one or more of the terminal or a policy control function network element, the session management network element, the first network element, or the second network element in the core network element.

For more detailed descriptions of the processing unit 901 and the transceiver unit 902, directly refer to related descriptions of the terminal device in the method embodiments shown in FIG. 5 to FIG. 8. Details are not described herein.

Based on the foregoing network architecture, refer to FIG. 10. FIG. 10 is a diagram of a structure of another communication apparatus according to an embodiment of this application. As shown in FIG. 10, the apparatus 1000 may include one or more processors 1001. The processor 1001 may also be referred to as a processing unit, and may implement a specific control function. The processor 1001 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU); execute a software program; and process data of the software program.

In an optional design, the processor 1001 may further store instructions 1003, and the instructions 1003 may be run by the processor, to enable the apparatus 1000 to perform the methods described in the foregoing method embodiments.

In another optional design, the processor 1001 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1000 may include a circuit. The circuit may implement a sending, receiving, or communication function in the foregoing method embodiments.

Optionally, the apparatus 1000 may include one or more memories 1002. The memory 1002 may store instructions 1004. The instructions may be run on the processor, so that the apparatus 1000 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1000 may further include a transceiver 1005 and/or an antenna 1006. The processor 1001 may be referred to as a processing unit, and controls the apparatus 1000. The transceiver 1005 may be referred to as a transceiver unit, a transceiver machine, a transceiver circuit, a transceiver apparatus, a transceiver module, or the like, and is configured to implement a transceiver function.

Optionally, the apparatus 1000 in this embodiment of this application may be configured to perform the methods described in FIG. 5 to FIG. 8 in embodiments of this application.

In an embodiment, the communication apparatus 1000 may be a terminal device or an apparatus (for example, a chip, a chip system, or a circuit) in the terminal device. When computer program instructions stored in the memory 1002 are executed, the processor 1001 is configured to control the processing unit 901 to perform the operations performed in the foregoing embodiment. The transceiver 1005 is configured to perform the operations performed by the transceiver unit 902 in the foregoing embodiment. The transceiver 1005 is further configured to send information to a communication apparatus other than the communication apparatus. The terminal device or the apparatus in the terminal device may be further configured to perform various methods performed by the terminal device in the method embodiments in FIG. 5 to FIG. 8. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, the scope of the apparatus described in this application is not limited thereto, and a structure of the apparatus may not be limited to that in FIG. 10. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

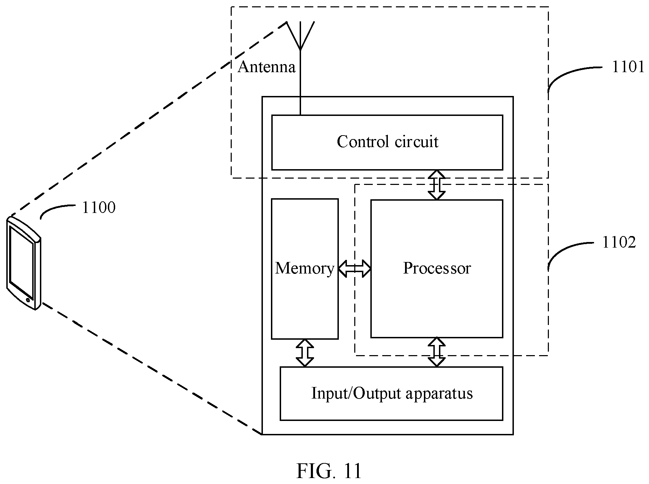

Refer to FIG. 11. FIG. 11 is a diagram of a structure of a terminal device according to an embodiment of this application. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 11 shows only one memory and one processor. In an actual terminal device, there may be a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 11 integrates functions of the baseband processor and the central processing unit. Persons skilled in the art may understand that the baseband processor and the central processing unit may alternatively be processors independent of each other, and are interconnected by using a technology such as a bus. Persons skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1101 of the terminal device 1100, and the processor that has a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component that is in the transceiver unit 1101 and that is configured to implement a receiving function may be considered as a receiving unit, and a component that is in the transceiver unit 1101 and that is configured to implement a sending function may be considered as a sending unit. In other words, the transceiver unit 1101 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an embodiment, the processing unit 1102 is configured to perform an operation performed by the processing unit 901 in the foregoing embodiment, and the transceiver unit 1101 is configured to perform an operation performed by the transceiver unit 902 in the foregoing embodiment. The terminal device 1100 may be further configured to perform various methods performed by the terminal device in the method embodiments in FIG. 5 to FIG. 8. Details are not described again.

An embodiment of this application further provides a computer-readable storage medium, and the computer-readable storage medium stores a computer program. When the program is executed by the processor, a procedure related to the terminal device in the communication method provided in the foregoing method embodiments may be implemented.

An embodiment of this application further provides a computer-readable storage medium, and the computer-readable storage medium stores a computer program. When the program is executed by a processor, a procedure related to the core network element in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When each of component modules in the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line. The at least one processor is configured to run a computer program or instructions to perform some or all steps recorded in the method embodiments corresponding to FIG. 5 to FIG. 8. The chip system may include a chip, or may include a chip and another discrete device.

An embodiment of this application further discloses a communication system. The system includes a core network element. For specific descriptions, refer to the communication methods shown in FIG. 5 to FIG. 8.

It should be understood that the memory mentioned in embodiments of this application may be a volatile memory or a nonvolatile memory, or may include both a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to a terminal and comprising:
obtaining first service information, wherein the first service information comprises an identifier of a first service;
sending a first service request to a core network element based on the first service information; and
determining a destination address of the first service, and sending data of the first service based on the destination address of the first service.

2. The method according to claim 1, wherein the first service information further comprises a correspondence between the identifier of the first service and a session parameter, and the session parameter comprises at least one of the following:
a data network name DNN and/or slice information, a session type, a service continuity mode, an application identifier, and an access type.

3. The method according to claim 1 or 2, wherein sending the first service request to the core network element based on the first service information comprises:
sending a session establishment or change request message to the core network element, wherein the session establishment or change request message comprises the identifier of the first service and/or the session parameter, or the session establishment or change request message comprises first request information, and the first request information comprises the identifier of the first service.

4. The method according to claim 1 or 2, wherein sending the first service request to the core network element based on the first service information comprises:
sending third request information or fourth request information to the core network element, wherein the third request information or the fourth request information comprises the identifier of the first service and information about an established session, and the information about the established session comprises at least one of an identifier of the session, an identifier of the terminal device, or an address of the terminal device.

5. The method according to claim 1 or 2, wherein sending the first service request to the core network element based on the first service information comprises: sending third request information or fourth request information to the core network element, wherein the third request information or the fourth request information comprises the identifier of the first service and a session establishment or change request message, and the session establishment or change request message comprises the identifier of the first service and/or the session parameter.

6. The method according to claim 3, wherein sending the session establishment or change request message to the core network element comprises:
sending the session establishment or change request message to a session management network element in the core network element.

7. The method according to claim 4 or 5, wherein sending the third request information or the fourth request information to the core network element comprises:
sending the third request information to a first network element in the core network element, or sending the fourth request information to a second network element in the core network element, wherein the first network element and the second network element are different network elements.

8. The method according to any one of claims 1 to 7, wherein determining the destination address of the first service comprises:
obtaining the destination address of the first service from one or more of the terminal or a policy control function network element, the session management network element, the first network element, or the second network element in the core network element.

9. A communication system, wherein the communication system comprises a first network element and a network element that corresponds to a destination address of a first service, wherein
the first network element is configured to determine the network element corresponding to the destination address of the first service; and
the network element corresponding to the destination address of the first service is configured to execute the first service.

10. The system according to claim 9, wherein the communication system further comprises a policy control function network element, and that the first network element determines the network element corresponding to the destination address of the first service specifically comprises:
the first network element obtains, from the policy control function network element, an execution policy corresponding to the first service; and
the first network element determines, based on the execution policy corresponding to the first service, the network element corresponding to the destination address of the first service.

11. The system according to claim 10, wherein the communication system further comprises a session management network element, wherein
the session management network element is configured to send second request information to the first network element, wherein the second request information comprises an identifier of the first service.

12. The system according to claim 10, wherein the communication system further comprises a session management network element, wherein
the first network element is further configured to send a session establishment or change request message to the session management network element, wherein the session establishment request message comprises an identifier of the first service and/or a session parameter, and the session change request message comprises one or more of the identifier of the first service, a parameter of a session established by a terminal device, and an identifier of the session established by the terminal device.

13. The system according to claim 11 or 12, wherein the session management network element is further configured to send information about the terminal device and an address of a user plane network element to the first network element, wherein the terminal device and the user plane network element are configured to carry a session corresponding to the first service, and the information about the terminal device comprises at least one of an identifier of the terminal device or an address of the terminal device.

14. The system according to any one of claims 11 to 13, wherein the session management network element is further configured to obtain, from the policy control function network element, a session related policy corresponding to the first service.

15. The system according to any one of claims 11 to 14, wherein the communication system further comprises the user plane network element, wherein
the first network element is further configured to send the destination address of the first service to the session management network element; and
the session management network element is further configured to send the destination address of the first service to the user plane network element.

16. The system according to claim 9, wherein the communication system further comprises a second network element and a policy control function network element, wherein
the second network element is configured to obtain, from the policy control function network element, a policy corresponding to the first service, wherein the policy corresponding to the first service comprises an execution policy corresponding to the first service and a session related policy corresponding to the first service;
the second network element is further configured to send fifth request information to the first network element, wherein the fifth request information comprises an identifier of the first service and the execution policy corresponding to the first service; and
that the first network element determines the network element corresponding to the destination address of the first service specifically comprises:
the first network element determines, based on the execution policy corresponding to the first service in the fifth request information, the network element corresponding to the destination address of the first service.

17. The system according to claim 16, wherein the communication system further comprises a session management network element and a user plane network element, wherein
the first network element is further configured to send the destination address of the first service to the second network element;
the second network element is configured to send a session establishment or change request message to the session management network element, wherein the session establishment request message comprises the identifier of the first service and/or a session parameter, and the session change request message comprises one or more of the identifier of the first service, a parameter of a session established by a terminal device, and an identifier of the session established by the terminal device; and
the session management network element is further configured to send information about the terminal device and an address of the user plane network element to the second network element, wherein the terminal device and the user plane network element are configured to carry a session corresponding to the first service, and the information about the terminal device comprises at least one of an identifier of the terminal device or an address of the terminal device.

18. The system according to any one of claims 12 to 15 or the system according to claim 17, wherein the session parameter comprises at least one of the following:
a data network name DNN and/or slice information, a session type, a service continuity mode, an application identifier, or an access type.

19. The system according to claim 17 or 18, wherein the second network element is further configured to send the information about the terminal device or the address of the user plane network element to the first network element; and
the second network element is further configured to send the destination address of the first service to the user plane network element.

20. The system according to any one of claims 9 to 19, wherein the first network element is further configured to send configuration information to the network element corresponding to the destination address of the first service, wherein the configuration information comprises at least one of the address of the user plane network element, the identifier of the terminal device, the address of the terminal device, and an execution rule of the first service.

21. The system according to claim 15 or 17, wherein the user plane network element is configured to update a user plane address or the destination address of the first service with the first network element.

22. The system according to claim 21, wherein the user plane network element is further configured to send an updated destination address of the first service to the second network element.

23. A communication method, comprising:
determining, by a first network element, a network element corresponding to a destination address of a first service; and
executing, by the network element corresponding to the destination address of the first service, the first service.

24. The method according to claim 23, wherein determining, by the first network element, the network element corresponding to the destination address of the first service comprises:
obtaining, by the first network element from a policy control function network element, an execution policy corresponding to the first service; and
determining, by the first network element based on the execution policy corresponding to the first service, the network element corresponding to the destination address of the first service.

25. The method according to claim 24, wherein the method further comprises:
sending, by a session management network element, second request information to the first network element, wherein the second request information comprises an identifier of the first service.

26. The method according to claim 24, wherein the method further comprises:
sending, by the first network element, a session establishment or change request message to a session management network element, wherein the session establishment request message comprises an identifier of the first service and/or a session parameter, and the session change request message may comprise one or more of the identifier of the first service, a parameter of a session established by a terminal device, and an identifier of the session established by the terminal device.

27. The method according to claim 25 or 26, wherein the method further comprises:
sending, by the session management network element, information about the terminal device and an address of a user plane network element to the first network element, wherein the terminal device and the user plane network element are configured to carry a session corresponding to the first service, and the information about the terminal device comprises at least one of an identifier of the terminal device or an address of the terminal device.

28. The method according to any one of claims 25 to 27, wherein the method further comprises:
obtaining, by the session management network element from the policy control function network element, a session related policy corresponding to the first service.

29. The method according to any one of claims 25 to 28, wherein the method further comprises:
sending, by the first network element, the destination address of the first service to the session management network element; and
sending, by the session management network element, the destination address of the first service to the user plane network element.

30. The method according to claim 23, wherein the method further comprises:
obtaining, by a second network element from a policy control function network element, a policy corresponding to the first service, wherein the policy corresponding to the first service comprises an execution policy corresponding to the first service and a session related policy corresponding to the first service; and
sending, by the second network element, fifth request information to the first network element, wherein the fifth request information comprises an identifier of the first service and the execution policy corresponding to the first service; and
determining, by the first network element, the network element corresponding to the destination address of the first service comprises:
determining, by the first network element based on the execution policy corresponding to the first service in the fifth request information, the network element corresponding to the destination address of the first service.

31. The method according to claim 30, wherein the method further comprises:
sending, by the first network element, the destination address of the first service to the second network element;
sending, by the second network element, a session establishment or change request message to a session management network element, wherein the session establishment request message comprises an identifier of the first service and/or a session parameter, and the session change request message may comprise one or more of the identifier of the first service, a parameter of a session established by a terminal device, and an identifier of the session established by the terminal device; and
sending, by the session management network element, information about the terminal device and an address of a user plane network element to the second network element, wherein the terminal device and the user plane network element are configured to carry a session corresponding to the first service, and the information about the terminal device comprises at least one of an identifier of the terminal device or an address of the terminal device.

32. The method according to any one of claims 26 to 29 or the method according to claim 31, wherein the session parameter comprises at least one of the following:
a data network name DNN and/or slice information, a session type, a service continuity mode, an application identifier, or an access type.

33. The method according to claim 31 or 32, wherein the method further comprises:
sending, by the second network element, the information about the terminal device and the address of the user plane network element to the first network element; and
sending, by the second network element, the destination address of the first service to the user plane network element.

34. The method according to any one of claims 23 to 33, wherein the method further comprises:
sending, by the first network element, configuration information to the network element corresponding to the destination address of the first service, wherein the configuration information comprises at least one of the address of the user plane network element, the identifier of the terminal device, the address of the terminal device, and an execution rule of the first service.

35. The method according to claim 29 or 31, wherein the method further comprises:
updating, by the user plane network element, a user plane address or the destination address of the first service with the first network element.

36. The method according to claim 35, wherein the method further comprises:
sending, by the user plane network element, an updated destination address of the first service to the second network element.

37. A communication apparatus, comprising:
a processing unit, configured to obtain first service information, wherein the first service information comprises an identifier of a first service; and
a transceiver unit, configured to send a first service request to a core network element based on the first service information, wherein
the processing unit is further configured to determine a destination address of the first service; and
the transceiver unit is further configured to send data of the first service based on the destination address of the first service.

38. The apparatus according to claim 37, wherein the first service information further comprises a correspondence between the identifier of the first service and a session parameter, and the session parameter comprises at least one of the following:
a data network name DNN and/or slice information, a session type, a service continuity mode, an application identifier, or an access type.

39. The apparatus according to claim 37 or 38, wherein when sending the first service request to the core network element based on the first service information, the transceiver unit is specifically configured to:
send a session establishment or change request message to the core network element, wherein the session establishment or change request message comprises the identifier of the first service and/or the session parameter, or the session establishment or change request message comprises first request information, and the first request information comprises the identifier of the first service.

40. The apparatus according to claim 37 or 38, wherein when sending the first service request to the core network element based on the first service information, the transceiver unit is specifically configured to:
send third request information or fourth request information to the core network element, wherein the third request information or the fourth request information comprises the identifier of the first service and information about an established session, and the information about the established session comprises at least one of an identifier of the session, an identifier of a terminal device, or an address of the terminal device.

41. The apparatus according to claim 37 or 38, wherein when sending the first service request to the core network element based on the first service information, the transceiver unit is specifically configured to: send third request information or fourth request information to the core network element, wherein the third request information or the fourth request information comprises the identifier of the first service and a session establishment or change request message, and the session establishment or change request message comprises the identifier of the first service and/or the session parameter.

42. The apparatus according to claim 39, wherein when sending the session establishment or change request message to the core network element, the transceiver unit is specifically configured to:
send the session establishment or change request message to a session management network element in the core network element.

43. The apparatus according to claim 40 or 41, wherein when sending the third request information or the fourth request information to the core network element, the transceiver unit is specifically configured to:
send the third request information to a first network element in the core network element, or send the fourth request information to a second network element in the core network element, wherein the first network element and the second network element are different network elements.

44. The apparatus according to any one of claims 37 to 43, wherein when determining the destination address of the first service, the processing unit is specifically configured to:
obtaining the destination address of the first service from one or more of the terminal or a policy control function network element, the session management network element, the first network element, or the second network element in the core network element.

45. A communication apparatus, comprising a processor, wherein the processor is configured to execute a computer program or instructions in a memory; and when the computer program or the instructions are executed by the processor, the apparatus is enabled to perform the method according to any one of claims 1 to 8, or perform the method according to any one of claims 23 to 36.

46. The apparatus according to claim 45, wherein the communication apparatus further comprises the memory.

47. A computer-readable storage medium, wherein the computer-readable storage medium stores a computer program or computer instructions; and when the computer program or the computer instructions are executed by a processor, the method according to any one of claims 1 to 8 is implemented, or the method according to any one of claims 23 to 36 is implemented.

48. A computer program product comprising program instructions, wherein when the program instructions are run on a computer, the method according to any one of claims 1 to 8 is implemented, or the method according to any one of claims 23 to 36 is implemented.

49. A chip system, comprising at least one processor, memory, and interface circuit, wherein the memory, the interface circuit, and the at least one processor are interconnected through a line; the at least one memory stores instructions; and when the instructions are executed by the processor, the method according to any one of claims 1 to 8 is implemented, or the method according to any one of claims 23 to 36 is implemented.
